# EUROPEAN PATENT APPLICATION

(11) **EP 2 861 014 A1**
(43) Date of publication of application: **15.04.2015**
(21) Application number: 14187024.6
(22) Date of filing: 30.09.2014
(51) Int. Cl.: H04W 36/04, H04W 36/18

(54) **Macrocell enabled MM-wave superspot for mobility**

(30) Priority: 30.09.2013 US 201314042085
(71) Applicant: BlackBerry Limited, Waterloo, ON N2K 0A7 (CA)
(72) Inventor: Periyalwar, Shalini Suresh, Waterloo, Ontario N2L 6N4 (CA); Bontu, Chandra Sekhar, Nepean, Ontario K2J 5G8 (CA); Womack, James Earl, Bedford, TX 76022 (US); Xin, Yan, Kanata, Ontario K2K 2R1 (CA); Steer, David Gywn, Nepean, Ontario K2H 8Z8 (CA)
(74) Representative: Greenaway, Martin William

(57) **Abstract**

A system and method may use mm-wave superspots to download high volumes of data to a moving or stationary mobile device traveling along a travel route that the moving mobile device is traveling. A macrocell in communication with the mobile device may predict the route that the mobile device is traveling, such as via GPS location, moving speed and direction, map information, etc. Alternatively, the route being taken may be determined by wireless communication, such as between the mobile device and a macrocell and/or superspot. The macrocell and/or superspot may determine whether (1) there are any mm-wave superspots along the predicted or known route that the mobile device is taking; (2) there is any data that is requested or remaining to download to the moving mobile device; and/or (3) the received signal quality, channel conditions, and/or macrocell traffic to the mobile device are favorable for superspot downloading.

## Description

### FIELD

The present embodiments relate generally to mobile computing. More particularly, the present embodiments relate to downloading data to mobile devices via wireless communication.

### BACKGROUND

The demand for wireless services is continuing to grow exponentially, not just in the number of subscribers, but also in the vast variety of services accessed by a given subscriber. Wireless access may be now preferred over wired access even when a user is stationary (such as when in the office). Even so, mobile users may still comprise a large part of wireless service usage. For instance, a pedestrian mobile device user may download content on the way to a meeting. Additionally, even at high speeds, passengers in a vehicle may be downloading content for viewing.

As an example, mobile users in a car or on a train may be accessing video and other high data volume downloads. However, this type of user demand for wireless spectrum cannot be adequately met using conventional download techniques. Conventional techniques may, *inter alia,* suffer from poor connectivity, ineffective use of bandwidth or other resources, unsatisfactorily user experience, and/or insufficient data rates; require the use of handovers; and/or have other deficiencies.

### BRIEF SUMMARY

The present embodiments relate to mobile computing, and may employ mm-wave superspots to download high volumes of data to a mobile device. The mobile device may be moving, and a macrocell network in communication with the moving mobile device may predict the route, and/or have knowledge of a predetermined route, that the user associated with the mobile device is traveling. The macrocell network may determine: (1) whether there are any mm-wave superspots along the predicted or predetermined route that the mobile device is taking; (2) whether there is any data that is requested or remaining to download to the moving mobile device; and/or (3) whether the received signal quality, channel conditions, and/or macrocell traffic to the mobile device are favorable to support downloading data to the mobile device via the mm-wave superspot.

In one aspect, a computer-implemented method of data transfer to a mobile device may be provided. The method may include (1) wirelessly or otherwise receiving a request for a data download from and/or to a mobile device at a first entity, the first entity being configured to transmit to, and/or receive from, the mobile device via a first frequency (e.g., the first entity may be in wireless communication with the mobile device via the first frequency, such as frequencies used by the 3GPP Long Term Evolution (LTE) or IEEE 802 radio systems); (2) directing, at the first entity, the staging of the data download at a second entity via wireless communication between the first entity and the second entity, the second entity may be configured to transmit to, and/or receive from, the mobile device via a second frequency that is different from the first frequency (e.g., the second entity may be capable of wireless communication with the mobile device via the second frequency, such as a mm-wave related frequency or other frequency capable of providing for large volume downloads); (3) determining (such as at the first or second entity), when the mobile device will be within wireless communication range of the second entity, or otherwise capable of receiving the data download via the second frequency; (4) remotely instructing or controlling the mobile device to activate a transceiver configured for the second frequency, such as via wireless communication between the mobile device and the first or second entity; and/or (5) remotely or wirelessly directing (such as at or from the first or second entity), or otherwise causing, the data download to be transmitted to the mobile device from the second entity via the second frequency while simultaneously maintaining a connection or wireless communication between the first entity and the mobile device via the first frequency. In one embodiment, the first entity may be a macrocell and the second entity may be a mm-wave superspot. The method may include additional, less, or alternate steps, including those discussed elsewhere herein.

In another aspect, a network device configured for downloading data to a mobile device may be provided. The network device may include a processor configured to: (a) wirelessly receive a request for a mobile device data download from a network associated with the network device, the network device may be associated with a macrocell or base station, and/or may be configured to transmit and receive via a first frequency via wireless communication with the mobile device and be in wireless communication with the mobile device via the first frequency; (b) predict a travel route being taken by the mobile device and/or predict when the mobile device will be within wireless communication range of a superspot; (c) stage the mobile device data download at the superspot via wireless communication with the superspot, the superspot being configured to transmit and receive via a second frequency that is different from the first frequency; (d) instruct the mobile device to activate a transceiver configured for the second frequency via wireless communication; and/or (e) cause, via wireless communication with the superspot and/or mobile device, the mobile device data download to be wirelessly transmitted to the mobile device from the superspot via the second frequency while simultaneously maintaining the wireless communication between the mobile device and the network device via the first frequency. The network device may include additional, less, or alternative functionality.

In another aspect, a computer-implemented method of data offloading to a mobile device via a cellular wireless system may be provided. The method may include, at the mobile device (or moving mobile device): (a) wirelessly communicating with a macrocell via a first frequency at the mobile device; (b) turning on a transceiver (or receiver) operating on a second frequency that is different from the first frequency at the mobile device when movement of the mobile device is expected to bring the mobile device within range of a superspot and there is data marked for high speed download to the mobile device; and/or (c) receiving data packets from the superspot via the transceiver (receiver) on the mobile device operating at the second frequency when (1) the mobile device is within range of the superspot and simultaneously in wireless communication with the macrocell via a second transceiver operating at the first frequency, and/or (2) when signal quality or channel conditions are confirmed to support dual mode operation on the mobile device. As a result, a moving mobile device may receive periodic high speed downloads of data from superspots while traveling along a route and without requiring handovers from the macrocell. The method may include additional, less, or alternate actions, including those discussed elsewhere herein.

Advantages will become more apparent to those skilled in the art from the following description of the preferred embodiments which have been shown and described by way of illustration. As will be realized, the present embodiments are capable of other and different embodiments, and their details are capable of modification in various respects. Accordingly, the drawings and description are to be regarded as illustrative in nature and not as restrictive.

### BRIEF DESCRIPTION OF THE DRAWINGS

There are shown in the drawings arrangements which are presently discussed, it being understood, however, that the present embodiments are not limited to the precise arrangements and instrumentalities shown, wherein:
Figure 1 illustrates a diagram of an exemplary macrocell and a mm-wave cell within the macrocell umbrella;
Figure 2 illustrates a diagram of an exemplary wireless network configuration for a mm-wave superspot;
Figure 3 illustrates a diagram of an exemplary coverage region of a macrocell band mm-wave superspot proximity beacon;
Figure 4 depicts an exemplary mm-wave superspot connection procedure;
Figure 5A illustrates a diagram of an exemplary coverage region of a macrocellular band mm-wave superspot proximity beacon;
Figure 5B illustrates a diagram of an exemplary coverage region with two mm-wave superspots;
Figure 6 illustrates a diagram of a flow chart illustrating exemplary mm-wave radio operation with prediction for network node aggregation and mm-wave radio operation;
Figure 7 illustrates an exemplary signalling flow diagram for downlink (DL) mm-wave radio operation;
Figure 8 illustrates an exemplary signalling flow diagram for uplink (UL) mm-wave radio operation;
Figure 9 illustrates a diagram of exemplary detection of a mobile device via autocorrelating code;
Figure 10 illustrates a diagram of exemplary over-the-top signalling between a mobile device and superspot;
Figure 11 illustrates a diagram of an exemplary superspot communication process and control system in a mobile device;
Figure 12 illustrates a diagram of an exemplary superspot apparatus;
Figure 13 illustrates a diagram of an exemplary network element;
Figure 14 illustrates a diagram of an exemplary mobile device or user equipment (UE); and
Figure 15 illustrates a diagram of an exemplary processing component.

### DETAILED DESCRIPTION

The present embodiments relate to mobile computing, and may entail the use of mm-wave (*e.g*., 30 GHz, 60-70 GHz, etc.) superspots to download high volumes of data to a moving mobile device, such as at various points along a path or travel route that the moving mobile device is traveling. For instance, the mobile device may belong to a user traveling on a train, automobile, plane, ship, or other vehicle. In another scenario, a pedestrian may try to quickly download or upload a huge amount of data such as a video clip or a movie into his mobile device.

A macrocell (or base station) in communication with a mobile device may predict a path or route that the mobile device is traveling, such as via Global Positioning System (GPS) or Global Navigation Satellite System (GNSS) location, moving speed and direction, and/or map or travel route information (e.g., roads, highways, train tracks, water ways, etc.). Additionally or alternatively, the mobile device or another communication device (*e.g*., travel agent device) may transmit a predetermined route to the macrocell. The macrocell may then determine: (1) whether there are any mm-wave superspots along the predicted or predetermined route that the mobile device is taking; (2) whether there is any data that is requested or remaining to download to the moving mobile device *(e.g.,* a partially downloaded movie that the user is currently watching may require another download of data); and/or (3) whether the received signal quality, channel conditions, and/or macrocell traffic to the mobile device are favorable for superspot downloading.

Once a moving mobile device is determined to be within the vicinity (or within the wireless communication range) of the superspot (such as using mobile device GPS position information), or estimated to be within the vicinity (or within the wireless communication range) of the superspot based upon the mobile device's predicted or predetermined route and/or other information, such as mobile device speed and direction information, the mobile device may locally turn on, or be remotely directed to turn on, its mm-wave transceiver. The mobile device may turn on its mm-wave transceiver, without the use of a handover from the macrocell, to receive a high data-rate download from the superspot.

During the superspot download, the mobile device may be operating in so-called "dual mode" - *i.e.,* receiving data simultaneously from both the macrocell and the superspot. This is assuming that conditions are favorable for dual mode operation. For instance, if there is no data that is available and/or remaining for download from a specific superspot to the mobile device, or if signal quality and/or channel conditions are unfavorable, dual mode operation may not be permitted at this superspot.

In one aspect, the present embodiments may include cooperative functioning of mm-wave and macrocell system components. A computer-implemented method may include optionally enabling dual mode operation of a mobile device that facilitates connection/wireless communication with both a macrocell and a superspot simultaneously based upon a predicted or predetermined travel route of the mobile device and/or favorable channel conditions or signal quality. Based upon estimated channel properties, the physical layer data packet length of data transmitted by the superspot to the mobile device may also be scalable (*i.e.,* increased or decreased based upon current conditions).

The present embodiments may provide a mm-wave superspot concept for mobility that leverages a macrocell network. In one aspect, the present embodiments may provide a mm-wave channel characterization for rapid connection and release, such as to and from the macrocell network, as the mobile transitions the superspot. In another aspect, the need for handover from the macrocell to the superspot during data transfer may be alleviated. In another aspect, mobile devices may wirelessly communicate using LTE control channels (such as from a macrocell) and download data via mm-wave frequencies (such as from superspots). The present embodiments may also, *inter alia,* enable focused beam forming, and/or the rapid preparation of a mm-wave transceiver for data transfer.

The mm-wave superspot may be deployed primarily as a user plane resource, while the control plane may remain predominantly within the macrocellular network. This approach may enable efficient utilization of the mm-wave superspot in mobility conditions by utilizing knowledge of the data traffic for a given mobile device and its radio throughput estimate based upon the measured speed of the mobile device and channel conditions. The system may be enabled through the introduction of a mm-wave superspot gateway that works cooperatively with the macrocellular system. Also, the system may be designed such that the mobile device's mm-wave radio may not turn on until absolutely needed for high volume data transfer, thus conserving battery power.

### I. EXEMPLARY MM-WAVE SUPERSPOTS

The demand for wireless spectrum may cause wireless stakeholders to seek alternate spectrum options, such as in the mm-wave (millimeter wave) bands *(e.g.,* 30 GHz, 60-70 GHz, or other relatively high GHz bands) where large bandwidths (including bandwidths over one GHz) may be accessed and yield multi-gigabit rates. Mm-wave communications may be considered for indoor access, as well as for outdoor cellular access. Additionally, the Institute of Electrical and Electronics Engineers (IEEE) 802.11ad standard (sometimes also referred to as "WiGig") is able to provide communications at gigabits per second (Gbps) rates for indoor wireless personal area networks (WiPANs) in the 60 GHz band. As described herein, the present embodiment may employ mm-wave superspots (*i.e.,* mm-wave coverage areas) on highways, on busy streets, or other travel routes where a moving mobile device may communicate through the superspot.

A vehicle in motion may likely be communicating on a low band *(e.g.,* 1 GHz) and may be transmitting at relatively low data rates due to the limited spectrum available in that band. This may be an issue as applications become more data hungry. In these cases, the location of people and associated vehicles (and even their trajectory) may be identifiable. In some embodiments, deployment of mm-wave cells in areas of high demand may be used to answer the demand for data hungry applications. Such deployments may cater to pedestrian and vehicular users. Mm-wave deployments may also be used at strategic locations, such as along train tracks, highways, water ways, and/or other travel routes. In some applications, superspots may be positioned on the ground along aircraft flight paths and used to provide supplementary high capacity data links to aircraft and their passengers as they transit over the superspots.

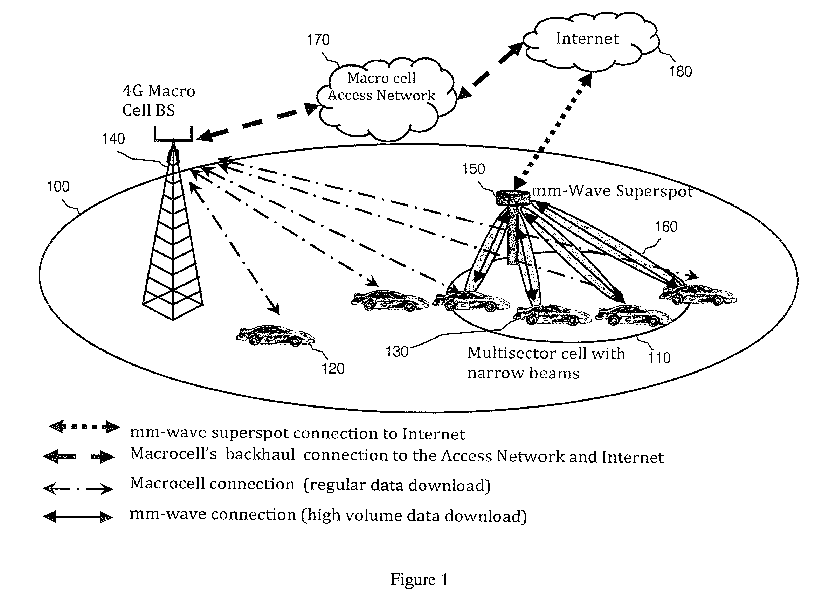

Figure 1 is a diagram of an exemplary macrocell 100 comprising an mm-wave cell 110. The mm-wave cell 110 may be referred to herein as a superspot. The superspot may support Gigabit capacity. While Figure 1 depicts vehicular mobility, the configuration may also be applicable to pedestrian mobility, train mobility, boat mobility, or any other type of mobility related to a wireless communication device. The macrocell 100 may be supported by a base station 140. The base station 140 may communicate with a mobile device 120 within the macrocell 100 and may provide the mobile device 120 with access to a macrocell access network 170. A second mobile device 130 may be within the coverage area of the mm-wave cell 110 and may communicate via mm-wave with the mm-wave superspot antenna 150 and via a 4G or other signal with the base station 140.

While macrocell antennas may be located on a tower, mm-wave antennas may be located at a significantly lower height, for example, on a lamp post or light post. Such mm-wave superspots may be strategically located in high internet traffic areas to provide high bandwidth connections to users. In some embodiments, superspots may be strategically located in a gas station kiosk and may be used by a stationary mobile device for Gbps communications while filling a gas tank. In such a case, adaptive beamforming with a pencil beam may be directed to the stationary mobile device/user and the mm-wave superspot may function like a Wi-Fi access point.

Superspots may coexist with macrocells. The mm-wave cells 110 may be operated independently through a direct connection to the internet 180. Alternately, similar to the interoperability between Wi-Fi hotspots and 3G/4G macrocells, the mm-wave cell 110 may be designed to be interoperable with the macrocell 100.

The propagation characteristics of mm-wave communications may require the use of smaller sectors or beams 160 for adequate mm-wave signal propagation. Thus, in some cases, instead of three sectors with one beam per sector, the mm-wave cell 110 may employ three sectors with 3-6 beams per sector or some such arrangement of beams to provide coverage in the sectors. Therefore, compared to a conventional pico cell's sector antennas (*i.e.,* one beam per sector), a mm-wave superspot may be equipped with multiple beams 160 per sector. In some cases, a wider sector with mm-wave signals may experience outages on the fringes of the sector due to signal dispersion at GHz frequencies.

When a mobile device is in motion, it may or may not be practical to actively beamform to/from the mobile device. Therefore, in some embodiments, static beamforming may be employed. Also, if the beams are relatively narrow *(e.g.,* 20 degree beams, and 6 beams per sector), a mobile device may rapidly transit the beams.

The mobile device's connectivity with the mm-wave superspot's beam may be in the order of seconds. The mobile device may even transit the beam in a fraction of a second (for reference, at 36 kilometers per hour, a 10 meter superspot may be covered or transited in approximately 1 second). Gbps download may be possible from the mm-wave cell in these brief encounters. This may require a rapid preparation of the mobile device and superspot transceivers. Channel estimates may be, at best, approximate since the mobile device spends a very short time in the beam's coverage. The channel time coherence may be much less than a LTE subframe or slot.

In some embodiments, a mobile device connected to a macrocell may handover to the mm-wave superspot while it is within the coverage of the superspot and may be handed back to the macrocell once it leaves the coverage area. There may be two instances of handover - from macrocell to mm-wave cell and from mm-wave cell back to the macrocell, over a duration of a few seconds. However, this design option may have drawbacks.

### II. EXEMPLARY MOBILE COMPUTING EMBODIMENTS

The present embodiments may supplement ongoing macrocellular communications with occasional high-burst data based upon demand for the data. The mm-wave superspots may be designed to be interoperable with macrocells (and/or base stations). The system may be designed on the basis that a short range (< 50 m), narrow beam width (15/20 degrees) mm-wave link may be more robust in propagation than a longer range link, since the mm-wave channel may be subject to significant weather related (e.g., rain) attenuation for longer links. The macrocell (and/or base station) may assist in the operating of the mm-wave superspots.

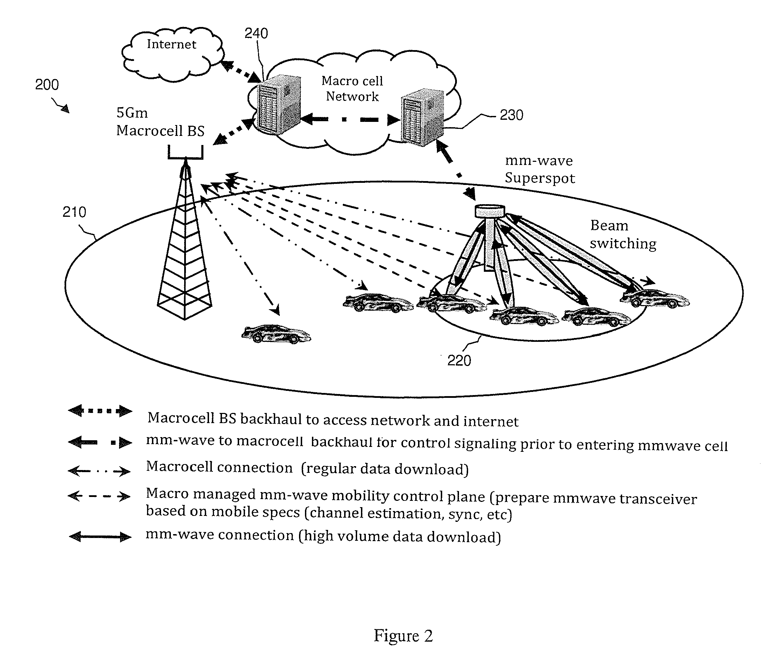

Figure 2 is a diagram of an exemplary wireless network configuration for an mm-wave superspot 200. The wireless network configuration for an mm-wave superspot 200 may contain a macrocell 210 and an mm-wave superspot 220.

The mm-wave superspot 220 may be deployed primarily as a user plane resource and the control plane may remain predominantly within the macrocellular network. The macrocell 210 may be enhanced with a mm-wave mobility control channel and a macrocell scheduler may be responsible for the allocation of a macrocell band beacon resource to mm-wave superspot 220 within the macrocell's 210 coverage area. The macrocell 210 may be responsible for retransmissions when the mobile device leaves the mm-wave superspot 220 coverage. The macrocell 210 may also maintain and update the mm-wave superspot proximity list, *e.g.,* a list of superspots within a dual mode mobile device's predicted trajectory based upon proximity prediction that anticipates the proximity of a dual mode mobile device to a mm-wave superspot 220. The mm-wave superspot 220 may be equipped with a macrocell downlink transmitter solely for the purpose of transmitting the macrocell band beacon.

A dual mode (mm-wave and macrocellular wireless communication enabled) mobile device may be able to read the macrocell band beacon without having to turn on the mm-wave receiver to recognize the presence of a mm-wave superspot 220. The system may be equipped with a mm-wave superspot gateway 230 that oversees and controls the flow of traffic to/from the mm-wave superspot 220 in cooperation with the macrocellular system.

A unique feature in the mm-wave superspot gateway 230 may be the maintenance of a Radio Frequency (RF) database characterizing the mm-wave superspot's channel properties. The mm-wave superspot gateway 230 may also perform proximity prediction. The proximity of a mobile device to the mm-wave superspot 220 may be predicted using mobile device location data and destination data as reported by a dual mode-enabled mobile device on the macrocell uplink. The mm-wave superspot gateway 230 may be connected to the macrocell 210 through a macrocell serving gateway 240.

The system described in Figure 2 may address at least two issues: (1) efficient operation of the mm-wave transceiver in the mobile device; and/or (2) avoidance of mobile device handover between the mm-wave transceiver and the macrocellular base station. The utilization of a macrocellular band connection to turn on the mm-wave transceiver only as needed may make the mobile device's radios operate more efficiently. The rapid preparation of the mm-wave transceiver may be achieved through a RF database of *a priori* measurements of the channel and/or prediction of mobile device trajectory, which may involve estimating a mobile device route and/or using knowledge of a predetermined mobile device route.

The avoidance of handover may be achieved by the mm-wave superspot gateway working cooperatively with the macrocell network and the mm-wave superspot system, and/or managing the mobile device's traffic flow with the assistance of the macrocellular system. This approach may enable efficient utilization of the mm-wave superspot in mobility conditions, such as by utilizing knowledge of the data traffic for a given mobile device and/or its radio throughput estimate based upon the measured speed (and/or direction) of the mobile device and channel conditions.

### III. 5GM MACROCELL SYSTEM ENHANCEMENTS

A 5Gm macrocell system may support one or more mm-wave superspot(s) within its coverage region. In addition to others, the following features may distinguish the 5Gm macrocell from the conventional macrocell. The 5Gm macrocell system may: (1) have indirect connectivity to the mm-wave Superspot Gateway (mmwSG); (2) support a separate mm-wave mobility Control CHannel (mmwCCH); (3) assign a macrocell beacon resource to the mm-wave superspots in a given macrocell's coverage; (4) maintain and update a mm-wave superspot proximity list for each connected mobile device in its coverage area; (5) assist the mmwSG in connecting the mobile device to the mm-wave superspot; and/or provide other functionality, including the functionality described elsewhere herein.

### A. Macrocell Mm-wave Mobility Control CHannel (mmwCCH)

For a specific application of data being downloaded at an mm-wave superspot, the macrocell system may be providing mobility control plane support and optionally, any supplementary user plane control support, such as retransmission of packets not received during the mm-wave transmissions between the mm-wave superspot and the dual mode mobile device. A macrocell mm-wave mobility Control CHannel (mmwCCH) may carry the mm-wave communications related control signalling between the mobile device and the mm-wave Superspot Gateway (mmwSG) on the air interface. The mmwCCH may be both a downlink (DL) channel and an uplink (UL) channel connecting the dual mode mobile device and the mm-wave system.

All messaging to the mobile device from the mmwSG may be routed through the mmwCCH until a new mm-wave channel may be set up between the mobile device and the mm-wave superspot. For example, the mmwCCH may be used to obtain the mobile device's current location and destination data. On the downlink, the mmwCCH may be used to query the dual mode mobile device for its current location and destination information. On the uplink, the dual mode mobile device may respond to the query with the requested data. The 5Gm macrocell may then convey this data to the mmwSG for further processing.

The mmwCCH may carry two types of messages. First, it may transmit the control messaging between the mobile device and the mmwSG. In addition, it may support a very high priority (circuit like) control signalling between the mmwSG and the dual mode mobile device for preparing and modifying the mm-wave transceivers at the superspot and/or mobile device immediately prior to connection on the mm-wave band.

### B. Macrocell Beacon Resource for Mm-wave Superspot

The 5Gm macrocell may assign a macrocell beacon downlink resource to each mm-wave superspot within its coverage area, such as when requested by the mmwSG. The list of superspots within its coverage area may be obtained from the mmwSG. The mm-wave superspot's macrocellular band radio may utilize this assignment to transmit a beacon in the macrocellular band that may be read by a mobile device without having to turn on its mm-wave receiver.

### C. Mm-wave Superspot List

The macrocell may send a mm-wave superspot list to the mobile device for measurement of the macrocell beacon. Based upon the mobile device reported signal strength of the beacon, the macrocell may prioritize this list for each mobile device.

### IV. MM-WAVE SUPERSPOT GATEWAY (mmwSG)

The mm-wave Superspot Gateway (mmwSG) may be connected to both the macrocellular network and the mm-wave superspot. The mmwSG may enable the mobile device to be persistently connected to the macrocell, as well as opportunistically or selectively connected to a mm-wave superspot.

The mmwSG may (1) receive and process reports of the mobile device's location and trajectory. Based upon the reports, the mmwSG may predict the imminent proximity of the mobile device to one or more superspots. The mmwSG may start multicasting the requested data to all the superspots which are predicted to be in the imminent proximity. The mmwSG may (2) receive and process reports of the mm-wave superspot's macrocell beacon signal quality, such as signal strength or signal to noise ratio or signal to interference plus noise ratio being observed by the mobile device. Based upon the measurements, the mmwSG may determine when a mobile device enters and exits the superspot coverage. Furthermore, the superspots to which the data is being multicasted may be fine-tuned by discontinuing the data transmission to some of the superspots which are predicted to be not in the mobile device's proximity. Through the macrocell connection, the mmwSG may (3) advise the mobile device to add/remove an mm-wave carrier when the mobile device is in/out of range of a mm-wave superspot. Through processing measurements received from dual mode (macrocell and mm-wave enabled) mobile devices, the mmwSG may (4) prepare an RF database of approximate channel conditions in the beams of the mm-wave superspot, and/or convey this information to both the mobile device and the superspot to aid in initial channel estimation. Further details of the exemplary mmwSG's capabilities are given below.

### A. Prediction of Mobile Device's Trajectory

The mmwSG may perform prediction of the mobile device arriving in the proximity or wireless communication range of a mm-wave superspot. The mmwSG may predict the mobile device's trajectory with the knowledge of the mobile device's current location, speed, traveling direction, and/or its destination information. Additionally or alternatively, the mmwSG (or macrocell) may receive knowledge of a predetermined route from the mobile device, a travel agent, or a travel agency, such as a cab company, train company, transit entity, shipping company, etc., and use that route information in conjunction with the mobile device's current location (e.g., GPS location) and/or speed information (such as mobile device speed information, train speed information, vehicle speed information, travel route speed information, etc.) to predict when the mobile device will be within range of a superspot along the route that the mobile device is travelling. If the mobile device, for example, is an aircraft, the flight plan and routing may be used to predict the interactions with superspots along the way.

The mmwSG may then map the mm-wave superspot locations to the mobile device's trajectory to anticipate the possible mm-wave superspots that the mobile device may encounter, and/or the times at which the mobile device will encounter or transition the mm-wave superspots.

### B. Mm-wave Superspot Selection

The mmwSG may determine the mm-wave superspot to be engaged for a given mobile device based upon the mobile device's specific data traffic needs and its predicted or predetermined route. Not every mobile device passing in range of the superspot may engage or wirelessly communication with the superspot.

Based upon the traffic to/from the mobile device, as estimated by the mmwSG (and/or the macrocell/base station or mobile device), the mmwSG may download content destined for the mobile device to the mm-wave superspot in preparation for the mobile device approaching the mm-wave superspot. The mmwSG (and/or macrocell/base station or mobile device) may direct traffic to the mm-wave superspot, to multiple mm-wave superspots, and/or to both the mm-wave superspot and the macrocell/base station supporting the mm-wave superspot (denoted as 5Gm macrocell). The mmwSG (and/or macrocell/base station or mobile device) may route traffic to multiple mm-wave superspots based upon mobile device location and prediction and/or predetermined knowledge of its path (and optionally with mobile device, train, vehicle, or other speed information). Thus, the mm-wave system may perform under loose supervision of the mmwSG (or even the macrocell, base station, or mobile device themselves). The data routing/ multicasting to the superspots may be changed based on the signal quality measurement reports received from the mobile device. The signal quality measurement reports may consist of the signal quality of the wireless link between the nearby superspots and other cellular base stations. These measurements may be used by the serving cellular base station to predict the moving trajectory of the mobile device and further to decide the nearby superspots to which the data is required to be forwarded. Appropriate triggering methods for these tasks are specific to the base station implementation.

### C. RF Parameters Database and Mm-wave Radio Preparation

The mmwSG may host a mm-wave superspot RF database. The radio parameters (e.g., synchronization or pilot or beacon sequences, transmit power, etc.) for a given mm-wave radio's pencil beams along the highway, train tracks, or other travel route may be constantly uploaded to the database in the mmwSG. The radio parameters may be reported via the macrocell connection by querying mm-wave enabled mobile devices traversing the hotspot, or may be reported by dedicated RF sensing radios located in the mm-wave superspot's coverage area for reporting RF measurements.

Based upon the mobile device's RF profile and the stored patterns of RF measurements in the RF database, the mmwSG may *a priori* prepare the mobile transceiver for addition of an mm-wave carrier. It may also prepare the mm-wave superspot transceiver to pre-align to the mobile device's transceiver. The mm-wave superspot may use some of this *a priori* knowledge of the channel to perform some pre-coding of the signal prior to transmission.

Mm-wave superspots may be placed strategically on high traffic streets/thruways/train tracks/water ways/travel routes/etc. After which, the mm-wave superspots may transfer Gbps data from/to a mobile device. The superspot may employ fixed beams with beam switching. The mm-wave superspot's radio may only be turned on when there is a demand for Gbps rate downloads/uploads to/from the dual mode mobile devices in its coverage area. In addition to RF statistics provided by the mmwSG, the active mm-wave superspot may gather measurements, reported by active dual mode mobile devices and RF sensing nodes placed within its coverage vicinity, and may utilize them for approximating or estimating channel conditions in a beam.

### D. Mm-wave Superspot Physical Layer Enhancements

### i. Scalable Data Packet Length

In order to cater to the rapid transitioning of the mobile device through the mm-wave beams, the data packet length may be scalable to adapt to the mobility, since for a transmission with high mobility, channel characteristics may change rapidly. If a packet is long, the channel properties estimated and obtained from channel estimation may not be appropriately applied to the subsequent data detection through the whole packet. For example, a long packet will have more opportunities to experience beam switching, which may result in an increase in packet error rates.

Therefore, given the knowledge of the mobility, or degree thereof, of a mobile device in a mm-wave superspot's coverage, either the superspot or the mobile device may adaptively scale the data packet length. For example, for a higher mobility scenario, the data packet may be relatively shorter. Conversely, for a lower mobility scenario, the data packet may be relatively longer.

Additionally or alternatively, a "long" data packet may be fragmented into multiple shorter data packets, each of which may be attached with an additional channel estimation sequence inserted before that short data packet. The physical (PHY) preamble and the PHY header may be transmitted only once for a whole data packet.

### ii. Mm-wave Beacon

In order to allow measurements of the mm-wave channel by active mm-wave enabled dual mode mobile devices, the mm-wave transceiver may transmit a mm-wave beacon on each of its beams. This beacon may be used by the mobile device for the purpose of channel measurements.

This beacon measurement may also be reported by mm-wave active mobile devices to the mm-wave superspot. So, in one embodiment, the RF data base may only be used for initial setup. Once a mobile device is active, this beacon measurement may be used.

### E. Mm-wave Superspot Proximity Beacon in Macrocellular Band

It may be advantageous to know when the dual mode mobile device is approaching a superspot. The mm-wave superspot may also be equipped with a macrocell radio transmitter, which may or may not be used exclusively for transmitting a mm-wave superspot proximity beacon on the macrocellular band so as to allow dual mode mobile devices to detect the proximity beacon without having to turn on their mm-wave transceivers.

The received beacon signal quality may be adjusted in such a manner that it falls on outer boundaries of the coverage range of the mm-wave cell. The beacon may be transmitted on the entire sector/cell rather than on each beam of the mm-wave super spot.

### F. In-band Control Signalling

The in-band control signalling may only provide optional scheduling and beam switching control for the mobile device after successfully connecting to the best beam of the mm-wave superspot. Additional or alternate in-band control signalling may be used.

### G. Mm-wave Receiver

The mm-wave receiver in the mm-wave superspot may perform semi-coherent or non-coherent demodulation on the mm-wave link, since accurate channel estimates may not be available. Channel estimates may be, at best, approximate within a beam.

Since the beams may be narrow, channel estimation for one beam may not be suitable for another. For example, in the IEEE 802.11ad radio communications standard systems, the channel estimation sequence duration may be 655 ns (nano-seconds) or other lengths. As the mobile device transits through superspot beams, a data packet transmission, including the channel estimation sequence, may preferably not be too long in order that it may be fully received during the dwell time within the individual beam.

### H. Measurement of Mobile Device's Mm-wave Beacon

As a mobile device approaches a superspot, it may transmit a mm-wave beacon that is monitored and measured by the mm-wave superspot (and/or macrocell or base station). This may allow the superspot (and/or macrocell or base station) to know or otherwise determine that the mobile device is within range and to measure the uplink channel from the mobile device.

### V. RF SENSING NODES

RF sensing nodes may be placed in the coverage area of an mm-wave superspot to measure and report channel conditions to the network. Each beam's coverage in the mm-wave superspot may include at least one RF sensing node. Based upon the channel observed by the RF sensing nodes, channel estimation may be approximated *a priori* for the mm-wave superspot's coverage region.

The mm-wave superspot may not always be on, and may only be activated by the network if a mobile device needing high volume data is in the superspot's coverage region. The RF sensing nodes therefore may make downlink measurements only when the mm-wave superspot is on and transmitting to the mobile devices. Optionally, the operator or macrocell may periodically activate the mm-wave superspot (even if there is no user/mobile device requiring high volume data) with the explicit intention to gather RF measurements made by the RF sensing nodes.

### VI. DUAL MODE MOBILE DEVICES

A dual mode, or dual mode-enabled, mobile device may be registered with a macrocellular network that operates on a licensed cellular carrier. The dual mode mobile device may be equipped with a mm-wave transceiver and a macrocellular transceiver. Both may be operating when the mobile device is transferring data to/from the mm-wave superspot. It may be assumed that the mobile device employs an omni-directional antenna, in order to simplify the antenna configuration in the mobile device.

However, an omni-directional antenna may not always be used. Since the data throughput over the mm-wave bandwidth may be very high, such as 100-1000 times higher than the cellular throughput, the transmission and reception techniques may be preferred to be as simple as possible and may be separated in time when using the same channel (and/or the same carrier frequency).

One way to achieve multi-user communications may be with a Frequency Division Multiple Access (FDMA) approach. For example, the IEEE 802.11ad communications standard defines a set of 2.16 GHz bands for its users. In a multi-user system each user may be allotted different 2.16 GHz bands dedicated for their interaction time with the same beam of the superspot.

Some form of channel precoding may be considered since channel estimates may not be accurately obtained in the timeframe that a mobile device is in contact/wireless communication with a mm-wave superspot. Channel conditions may be related to both the superspot and mobile device. If the parameters at the mobile device side, e.g., antenna pattern or antenna polarization, are not specified in general, the accurate channel may not be determined. Additionally or alternatively, when the mobile device is moving faster and/or the channel statistics are expected to be changing rapidly, time-differential encoding may be employed. With limited pilot symbols, differentially coherent demodulation may be performed at the receiver.

Mm-wave enabled inactive dual mode mobile devices traversing the superspot may also optionally be queried to turn on their mm-wave radio to measure and report mm-wave RF measurements on the macrocell mm-wave Control CHannel (mmwCCH). The mobile devices may be queried to turn on the mm-wave radios even when the mobile devices have no data to exchange with the mm-wave superspot.

### A. Beacon Measurement

### i. Mm-wave Superspot's Macrocell Band Proximity Beacon Measurement

Dual mode mobile devices may monitor the macrocell band for a macrocell band proximity beacon transmitted by the mm-wave superspot, if advised by the macrocell in the mm-wave superspot proximity list. An advantage of this beacon may be that the mobile device need not turn on its mm-wave transceiver to determine proximity to the mm-wave superspot. The mobile device may detect the proximity beacon using its macrocell receiver that is already activated for macrocell communications. The macrocell band beacon's signal coverage area may be adjusted to map to an area that slightly exceeds the area of the mm-wave superspot.

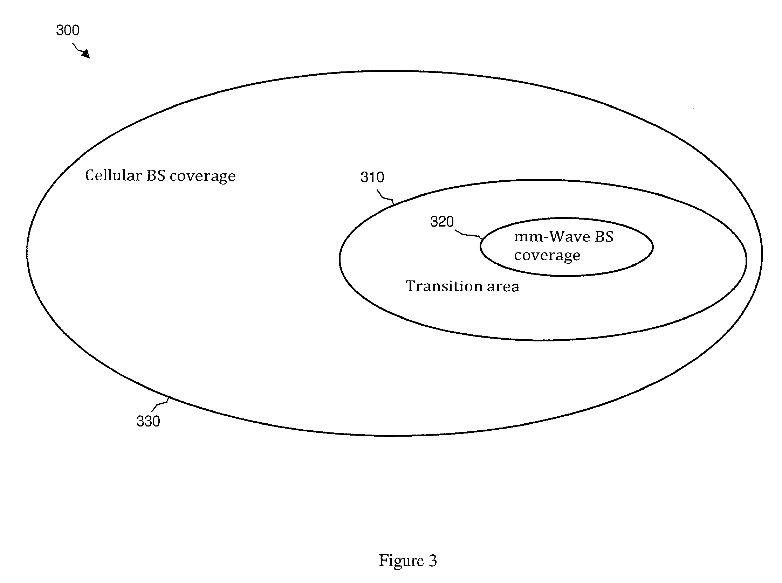

Figure 3 is a diagram of an exemplary coverage region of a macrocell band mm-wave superspot proximity beacon 300. The macrocell band beacon's signal strength may be adjusted to map to a transition area 310 exceeding the periphery of the mm-wave superspot area 320. Both the transition area 310 and superspot area 320 may be within the cellular base station coverage area 330. When a mobile device enters the transition area 310, the mobile device may be able to report a better received signal quality, e.g., a higher signal-to-noise ratio (SNR), on the mm-wave superspot proximity measurement.

### ii. Mm-wave Beacon Measurement

Inactive dual mode mobile devices that are not actively connected to the mm-wave superspot may be told, directed, or otherwise controlled to turn on their mm-wave receiver to detect and measure a mm-wave beacon transmitted by the mm-wave superspot. This activity may be conducted with the network *(e.g.,* mmwSG or macrocell BS) advising the dual mode mobile device to make a measurement of a specified channel with a message on the macrocell's mmwCCH. The dual mode mobile device, which may not need to connect to the mm-wave superspot, may report the measured signal strength to the network via the umbrella macrocell's (or base station's) uplink mmwCCH. This may avoid the need to turn on the mm-wave transmitter in the dual mode mobile device only to convey RF measurements.

For an active dual mode mobile device, if beacons are transmitted on each beam at different non-overlapping time slots, the dual mode mobile device may report the received signal quality for all of the beams that it may measure. This data may be useful to the mm-wave superspot for allocating or switching the beam associated with the mm-wave radio in the mobile device.

### B. Mm-wave Beacon Transmission

As a dual mode mobile device approaches a superspot, the mobile device may transmit a mm-wave beacon that is monitored and measured by the mm-wave superspot, such as if the mobile device has been advised on the mmwCCH to transmit the beacon. Alternatively, the mm-wave beacon may be transmitted by the mobile device when certain events occur. The conditions of these events may be broadcasted by the serving cellular base station. For example, an event can be defined as a signal quality threshold with respect to the serving and/or the neighbouring cellular base stations meeting predefined criteria. In this way, the superspot may measure the channel conditions for the active mobile device within the superspot's wireless communication coverage region.

### VII. MM-WAVE TRANSCEIVER DESIGN FOR MOBILITY

Due to the short rendezvous periods with the beams, the mm-wave receiver may be required to perform semi-coherent and/or non-coherent demodulation. Some degree of channel estimation may be available with the help of RF measurements in the RF database.

For example, at the transmitter, some pre-coding methods may be put in place to account for the channel variations. This may be applicable to both the mm-wave enabled mobile device, as well as the mm-wave superspot.

### VIII. LAYER 2 & RADIO RESOURCE MANAGEMENT (RRM)

The mobile device may not need to know the commencement of the mm-wave data transmission precisely. Some data packets addressed to another mobile device may be decoded unnecessarily, and/or some data packets may be missed. It may be the network's responsibility to keep these occurrences to a minimum.

In one aspect, it may be desirable to avoid retransmissions when dealing with Gbps streams of data. For example, since the data pipe may be really large, it may be advantageous to employ powerful forward error correction mechanisms. However, it may not be possible to avoid retransmissions altogether since the mobile device may reside for a very short period at the mm-wave superspot. To enable seamless retransmissions while the mobile device rapidly enters and exits the mm-wave superspot, coordination of retransmissions may include the umbrella macrocell (and/or base station) to which the mobile device is connected.

Some retransmissions may need to be requested from the 5Gm macrocell (and/or base station). Additionally or alternatively, the mobile device may continue to complete transmitting/receiving its residual retransmission data to/from the macrocell (and/or base station) after the mobile device exits the mm-wave superspot.

On the uplink, the mmwSG may maintain connection continuity. For instance, the mmwSG may maintain connection continuity by collating the Packet Data Convergence Protocol (PDCP) packets transmitted/received from the mm-wave superspot and that may be (if any) transmitted/received via the macrocell. PDCP functionalities may be fully or partially performed at the mmwSG. Some of the PDCP functions may be performed at the serving cellular BS. During the data packet transmission and reception at the superspot, the PDCP functionalities may be uninterrupted at the serving cellular BS.

The default radio resource management and scheduling approach may be that the data download is controlled by the macrocell's access network entities. At the same time, the scheduling on the beams and the beam switching may be controlled by the mm-wave superspot. No conventional handover of the mobile device into or out of the mm-wave superspot may therefore be supported (or required). Further, based upon the mobile device's speed (e.g., pedestrian, vehicular), some of the retransmissions may occur with the help of in-band signalling on the mm-wave band.

The data transmission from the mm-wave superspot may be performed in un-acknowledged mode, *i.e.,* there may be no packet retransmission. Furthermore, the DL protocol functionality of the macrocellular RAT may be assumed for the higher layers. For example, for an LTE system, the PDCP packets may be formed as described in the LTE standards. The Media Access Control (MAC) segmentation and PHY mapping may be done based upon the mm-wave transmission protocol, such as IEEE 802.11 ad or other wireless communication standards.

### A. Backhaul and Offloading Considerations

The data from the cellular Gate Way (GW) may be forwarded directly to the mmwSG for data offloading purposes. Because of the high data rate delivering capabilities of the mm-wave radios, the data rates over the backhaul may become a bottleneck. For example, the data interface between the macrocellular GW and the macrocellular Base Station (BS), and the data interface between the cellular GW and the mm-wave superspot may be required to support rates up to 10 Gbps and >40 Gbps, respectively. Note that this bandwidth may be shared among multiple data streams addressed to individual mm-wave superspot users.

The network interface between the macrocellular GW and the mmwSG may be a GigaBit optical Ethernet. When the macrocellular gateway decides to offload to a mm-wave superspot, the data may not be delivered to the macrocellular BS. Instead, the data may be sent directly to the mmwSG. If multiple mm-wave superspots are detected in the mm-wave superspot proximity list, the data may be forwarded to all of the superspots.

The data may be transferred from the macrocellular GW to the mm-wave superspot gateway much sooner than the mobile device's arrival at the mm-wave superspot. Additionally or alternatively, the data may be transferred in proximity to the mobile device's arrival time.

### B. Reliability

The reliability of the data transmission over the mm-wave channel may be provisioned such that the packet buffering at the mmwSG is minimized. Additional care may be exercised to maintain the data integrity (*i.e.,* packet sequencing to put the IP packets in the right or correct order) during the offloading procedure.

The unacknowledged PDCP data packets may be retransmitted from the macrocellular BS if the mobile device sends the receive status to the macrocellular BS after the data offloading function is concluded. Additional, fewer, or alternate backhauling and/or offloading techniques may be employed by the present embodiments.

### IX. EXEMPLARY OPERATION

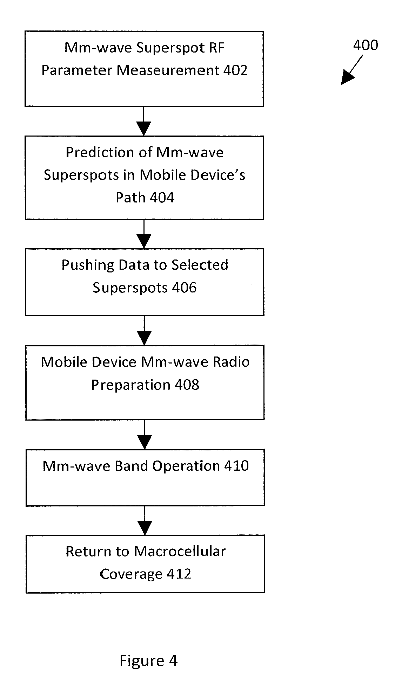

An exemplary mm-wave superspot connection procedure 400 of the present embodiments is discussed below and illustrated in Figure 4. The connection procedure 400 may comprise one or more of the following steps: (1) mm-wave superspot RF parameter measurement and calibration 402; (2) prediction and/or predetermined knowledge of mm-wave superspots in a mobile device's trajectory 404; (3) selecting the mm-wave superspot and pushing data to the superspot(s) 406; (4) macrocell assisted mm-wave radio preparation at the mobile device(s) 408; (5) mm-wave band operation 410; and/or (6) return to macrocellular coverage 412. The foregoing steps are described in further detail in the following paragraphs. The connection procedure may include additional, fewer, or alternate steps, including those discussed elsewhere herein.

### A. Mm-wave Superspot RF Parameters Measurement/Calibration

The connection procedure 400 may comprise mm-wave superspot RF parameters measurement and calibration 402. The radio parameters (e.g., synchronization or beacon or pilot sequences, transmit power, etc.) for a given mm-wave radio's narrow beams on the downlink along the highway, train track, or other travel route may be periodically uploaded to a database in the mm-wave Superspot Gateway (mmwSG). The radio parameters may be reported by mm-wave enabled mobile devices traversing the hotspot and/or by dedicated RF sensing nodes located in the coverage of the mm-wave superspot for reporting RF measurements. Along with the radio parameters, the mobile device's speed may be reported and stored with the corresponding radio parameters in the mmwSG's RF database. On the uplink, the mm-wave superspot's radio may measure the uplink channel characteristics of the active mobile devices in its coverage area and may store them in the mm-wave superspot for future reference. This may be an ongoing function to populate the RF parameters database in the mmwSG and the mm-wave superspot.

Thus, the channel estimates may be gathered *a priori* by the mmwSG, such as from dual mode mobile devices in the area and/or by RF sensing nodes that are strategically placed in the area. The data gathered may be extrapolated to generate additional points in the sample space using analytical formulas to include various mobile device speeds (such as via Doppler techniques), weather impacts, etc. This data may then be matched with the mobile device's and/or the mm-wave superspot's current conditions, and may also be communicated to the superspot in order to utilize all, or a portion of, *a priori* channel knowledge for demodulation/detection.

### B. Prediction of Mm-wave Superspots in Mobile's Trajectory

The connection procedure 400 may comprise prediction of the mm-wave superspots in the mobile device's trajectory 404. The procedure for utilizing the mm-wave superspot may begin with the prediction of mm-wave superspots that are likely to be in the mobile device's trajectory. For those dual mode mobile devices with active connection in its coverage area, the 5Gm macrocell may set up a mm-wave mobility Control CHannel (mmwCCH) with the mobile device. Some data, such as destination information entered on a car's GPS system, may be requested and transmitted on the mmwCCH to the 5Gm BS/mmwSG in order to pre-arrange data download/upload at the most suitable mm-wave radio along the mobile device's path. Additionally or alternatively, data such as direction of mobile device movement, speed, and traffic density, and/or data related to a predetermined route, such as a route along highways, train tracks, water ways, or other travel routes, may be requested and used by the mmwSG to aid in prediction.

The mmwSG may perform prediction by utilizing the foregoing types of data along with the known location coordinates of the mm-wave superspots in its domain. Also, based upon the predicted mm-wave superspots in the mobile device's trajectory, the mmwSG may decide which mm-wave superspot(s) to assign to the mobile device for mm-wave superspot proximity measurements, given the mobile device's path. In some embodiments, the mmwSG prediction may compute the estimated time until the download will occur. This may be communicated to the mobile device and the user, using the macrocellular communications link, so that they have some idea of how long it will be before they receive the data. If the delay is too long, for example, the user may cancel the data request or select a transmission via the macrocellular network.

### C. Selecting Mm-wave Superspot and Pushing Data to Superspots

The connection procedure 400 may comprise selecting the mm-wave superspot and pushing data to superspot(s) 406. Based upon the mobile device's location and the predicted proximity to a mm-wave superspot, the mmwSG may transmit a mm-wave superspot proximity list to the macrocell. The macrocell in turn may convey the list to the mobile device on the downlink mmwCCH. The mobile device may be asked to measure the macrocellular band beacon being emitted by the mm-wave superspots in the mm-wave superspot proximity list.

The macrocellular base station may transmit a set of thresholds to the dual mode mobile device to optimize the operation of the mm-wave radio. The mobile device may measure the macrocellular band beacon measurements. When the measurement exceeds the threshold, the mobile device may report the outcome to the macrocell on the uplink mmwCCH.

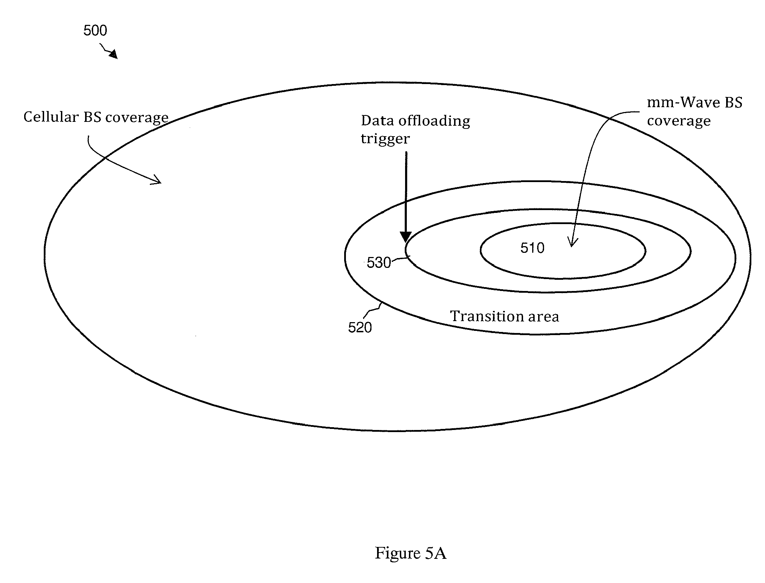

Figure 5A is a diagram of an exemplary coverage region of a macrocellular band mm-wave superspot proximity beacon 500. A dual mode inactive (in mm-wave band) mobile device approaching a mm-wave superspot coverage area 510 may be asked to start measuring the signal strength of the macrocellular band proximity beacon on its macrocellular band transceiver when the dual mode mobile device enters a transition area 520. At this point, the dual mode mobile device has not yet activated its mm-wave radio. When the beacon signal strength is greater than a threshold, the mobile device may report the incident on the uplink mmwCH and the macrocell BS may forward this data to the mmwSG. This information may be indicative of the mobile device's proximity to the mm-wave superspot.

When a predetermined threshold is exceeded, the mobile device may have crossed a transition line 530 or a data offloading trigger point, and if the mobile device has a large volume data download targeted for it, the mmwSG may start data transfer from the macrocellular network to the mm-wave superspot in the mobile device's vicinity.

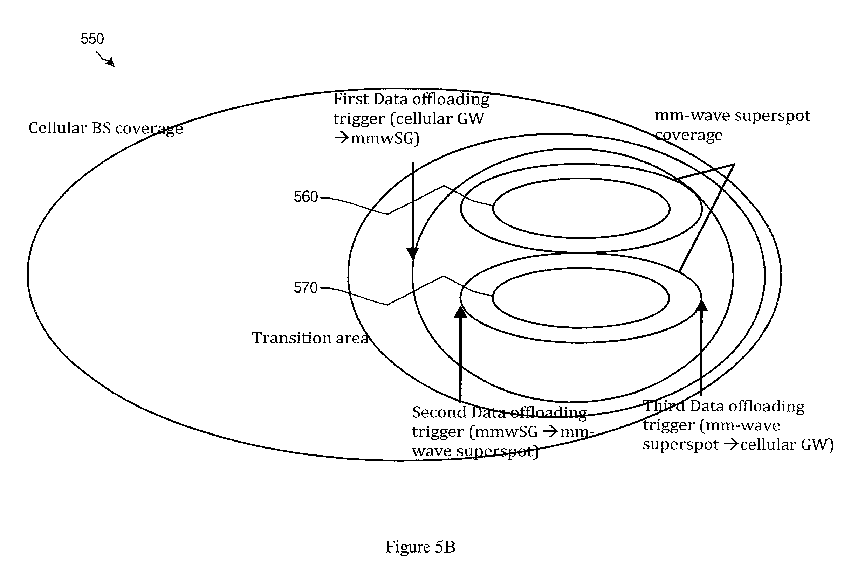

Figure 5B is a diagram of an exemplary coverage region with two mm-wave superspots 560, 570. When there are two mm-wave superspots 560, 570 in the dual mode mobile device's proximity, then the mmwSG may decide to start forwarding the data packets to both of the mm-wave superspots 560, 570.

Based upon the mobile device's direction of movement and various signal measurements reported by the mobile device, the mmwSG may forward the data packets to only one mm-wave superspot 560. The data forwarded to the other superspot 570 may be instructed to be discarded. In some embodiments, more than two mm-wave superspots may be present and each may receive data intended for a dual mode mobile device.

### D. Macrocell Assisted Mm-wave Radio Preparation at Mobile

The connection procedure 400 may comprise macrocell assisted mm-wave radio preparation at the mobile device 408. The mm-wave receiver of the mobile device may not always be in an operating mode. The mobile device may only be turned on when the mobile device enters a transition area and/or on approaching the mm-wave superspot's coverage boundary.

When the reported measurements exceed the next threshold and there is a large volume data to download/upload to/from the mobile device, the mobile device may be advised to turn on its mm-wave receiver. The mm-wave connection procedure may be enabled by the mmwSG only when the mmwSG detects a need for high volume data transfer to/from the mobile device based upon data traffic demands. The mmwSG may transmit the radio parameters to the dual mode mobile device and instruct the base station (BS) or macro cell to prepare the mobile device for setting up a mm-wave band connection with the mm-wave superspot.

The mobile device may measure the received signal quality over a mm-wave band beacon received from the mm-wave superspot, as specified in the macrocellular BS transmission on the mmwCCH. The signal quality measured may include the received signal strength over specified bands, code specific measurements to detect the special beams, etc. These measurements may be reported back to the macrocellular BS on the uplink mmwCCH. Subsequently, the macrocellular BS may forward this to the mmwSG, which may decide the spatial beam of the mm-wave superspot for initiating the off-loading of data.

The mobile device's mm-wave radio may now be woken up and may preconfigure the radio parameters so that when the mobile device enters the coverage of the mm radio beam, the mm-wave transmission may be set up to instantly transmit to, and/or receive from, the mm-wave superspot. Delay tolerant high volume data from/to the mobile device may be up/downloaded in this manner.

### E. Mm-wave Band Operations

The connection procedure 400 may comprise mm-wave band operation 410. At this point, the dual mode mobile device may also be automatically connected to the mm-wave superspot, without the need for a separate connection procedure. As the mobile device traverses the beams, it may report measurements from adjacent beams to the mm-wave superspot. The mm-wave superspot may switch beams for the mobile device based upon the observed signal-to-interference-noise ratio (SINR). Alternatively, as it may not always be possible to measure the SINR, the device may report the observed signal strength.

In a highway scenario, the lane and the velocity of the vehicle may be estimated. The mm-wave superspot may switch beams focused on that path at the appropriate rate. In one option, the mm-wave superspot may simulcast on all DL beams simultaneously. Coupled with aggressive channel coding, lower order modulation, and/or incoherent or semi-coherent demodulation, the mm-wave radio link may be enabled without the need for accurate channel estimates.

### F. Return to Macrocellular Coverage

The connection procedure 400 may comprise returning to macro-cellular coverage 412. When the mobile device moves away from the mm-wave superspot, the mobile device may inform the macrocellular BS accordingly. The condition for moving away from the mm-wave superspot may be based upon the mobile device measurements over the mm-wave bands. A signal quality threshold for this exit state may be defined in the broadcast message from the serving mm-wave superspot.

As the mobile device leaves the coverage of the mm-wave superspot and/or it completes the data upload, the mobile device may turn off the mm-wave radio. The mobile device may then return to IDLE mode, and/or remain in connected mode, such as with the macrocell, for other data communications.

If there is data left *(i.e.,* the mobile device cannot complete the entire upload or download), then the mobile may report this to the BS or to the mmwSG. Depending upon the proximity to the next mm-wave superspot, the remaining data may be buffered and scheduled at the next mm-wave superspot and/or transmitted to or received by the mobile device via macrocellular-based techniques or other wireless communication.

The operator or macrocell may not need to provide continuous coverage of mm-wave radios along the highway or other travel route. The mm-wave radio in the mobile device may be turned on next when the mobile device (or the network) has sufficient data buffered in it to upload (or download) and the mobile device is within the coverage of a mm-wave superspot (such as advised by the 5Gm BS to the mobile device).

Optionally, the mm-wave control plane may be enabled for all dual mode mobile devices in the vicinity of mm-wave superspots. The mobile devices may report mm-wave channel measurements (such as measuring the pilots from the mm-wave superspot) as they traverse the superspot, even if the mobile devices have no data to exchange.

### G. Exemplary Flow Chart

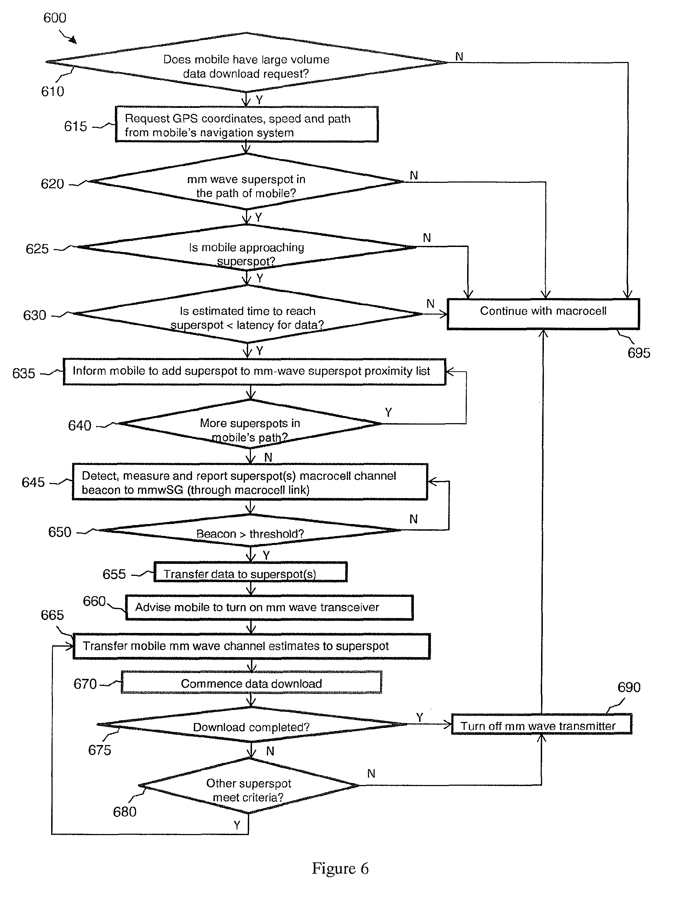

Figure 6 is a diagram of a flow chart illustrating exemplary mm-wave radio downlink operation with prediction for network node aggregation and/or mm-wave radio operation 600. At step 610, it may be determined whether or not the mobile device has a large volume data request. If it does not, the mobile device may continue using the macrocell for transmission at step 695. If the mobile device has a large volume data download request, the process may continue at step 615 by requesting location, speed, and direction of the mobile device and/or a predetermined route of the mobile device.

At step 620, it may be determined whether the mobile device will pass through a mm-wave superspot. If not, the mobile device may continue using the macrocell for transmission at step 695. If there is a mm-wave superspot in the path of the mobile device, the process may continue at step 625, where it may be determined whether or not the mobile device is approaching the superspot.

If the mobile device is not yet approaching the mm-wave superspot, the mobile device may continue using the macrocell for transmission at step 695. If the mobile device is approaching the superspot, the process may continue at step 630 by determining if the estimated time to reach the mm-wave superspot is less than the latency for the data requested. If not, the mobile device may continue using the macrocell for transmission at step 695. If the estimated time to reach the mm-wave superspot is less than the latency for the data requested, then the process may continue at step 635 by informing the mobile device to add the mm-wave superspot to its mm-wave superspot proximity list.

The process may continue at step 640 by determining if additional mm-wave superspots are in the mobile device's path. If yes, the process may return to step 635. If not, the process may continue to step 645. At step 645, the mm-wave superspot's macrochannel beacon may be detected, measured, and reported to the mmwSG through a macrocell link.

At step 650, it may be determined if the beacon is above a predetermined threshold. If not, the process may return to step 645. If the beacon is above the predetermined threshold, the large volume data may be transferred to the mm-wave superspot(s) at steps 655-675.

At step 660, the mobile device may be instructed to turn on its mm-wave transceiver. At step 665, mm-wave channel estimates may be transferred from the mobile device to the mm-wave superspot. At step 670, the large volume data download may commence.

At step 675, it may be determined whether or not the download has completed. If yes, the mobile device mm-wave transceiver may be turned off at step 690, and the mobile device may continue using the macrocell for transmission at step 695.

If the entire down load has not been completed, it may be determined whether another superspot may provide the remaining data to the mobile device at step 680. If yes, the process may return to step 665. If no, the mobile device mm-wave transceiver may be turned off at step 690, and the mobile device may continue using the macrocell for transmission at step 695. The exemplary mm-wave radio operation with prediction for network node aggregation and/or mm-wave radio operation 600 may include additional, less, or alternative functionality, including the functionality discussed elsewhere herein.

### H. Exemplary DL Signalling Flow Diagram

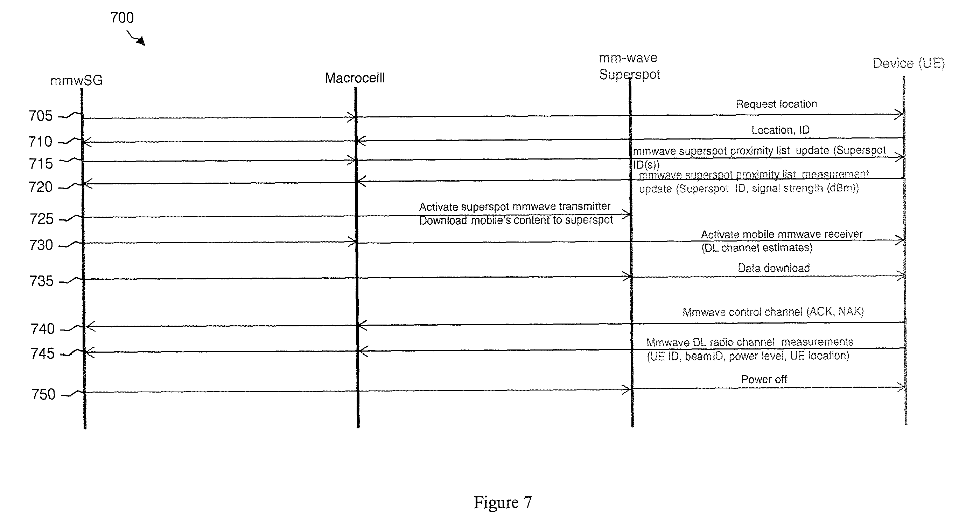

Figure 7 is a signalling flow diagram for exemplary downlink mm-wave radio operation 700. The flow may begin at event 705 with the mmwSG requesting the location of the mobile device from the macrocell, which then may request the location of the mobile device from the mobile device. At event 710, the mobile device may then provide the macrocell with a location and ID, which may then be forwarded to the mmwSG. At event 715, the mmwSG may provide a mm-wave superspot proximity list to the macrocell, which may then be provided to the mobile device. At event 720, the mobile device may then provide a mm-wave superspot proximity list measurement update to the macrocell, which in turn may be provided to the mmwSG.

At event 725, the mmwSG may instruct the mm-wave superspot to activate its mm-wave transceiver and also to download the mobile device's content to the mm-wave superspot. Next, at event 730, the mmwSG may inform the macrocell to instruct the mobile device to activate its mm-wave transceiver. Then, at event 735, the data may be downloaded to the mm-wave superspot and subsequently to the mobile device.

Next, at event 740, the mobile device may transmit an ACK (acknowledgement) or NACK to the macrocell via the mm-wave control channel. The macrocell may forward this information on to the mmwSG. At event 745, the mobile device may also provide mm-wave downlink radio channel measurements to the macrocell, which may in turn provide the information to the mmwSG. Finally, at event 750, the mmwSG may instruct the mm-wave superspot and the mobile device to power down their respective mm-wave transceivers. The exemplary downlink mm-wave radio operation 700 may include additional, less, or alternate functionality, including functionality discussed elsewhere herein.

### I. Exemplary UL Signaling Flow Diagram

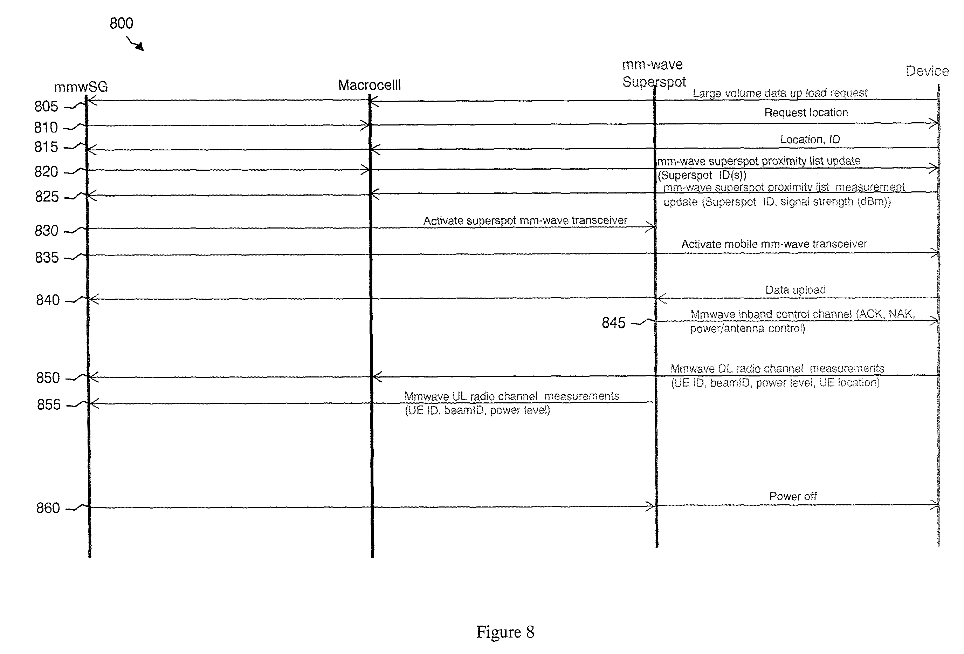

Figure 8 is a signaling flow diagram for uplink mm-wave radio operation 800. The signaling flow may begin at event 805 with the mobile device making a large volume data request to the macrocell, which may also be shared with the mmwSG. At event 810, the mmwSG may request the location of the mobile device via the macrocell. At event 815, the mobile device may provide its location to the mmwSG via the macrocell.

At event 820, the mmwSG may then provide a mm-wave superspot proximity list update to the mobile device via the macrocell. Then, at event 825, the mobile device may provide a mm-wave superspot proximity list measurement update to the mmwSG via the macrocell.

At event 830, the mmwSG may instruct the mm-wave superspot to activate its mm-wave transceiver. At event 835, the mmwSG may then instruct the mobile device to activate its mm-wave transceiver. Then, at event 840, the mobile device may begin its data upload to the mm-wave superspot, which in turn may upload the data to the mmwSG.

At event 845, the mm-wave superspot may then provide a mm-wave in-band control channel signal to the mobile device. At event 850, the mobile device may provide the mmwSG with mm-wave downlink radio channel measurements via the macrocell. At event 855, the mm-wave superspot may provide the mmwSG with mm-wave uplink radio channel measurements. Finally, at event 860, the mmwSG may instruct the mm-wave superspot and the mobile device to deactivate their respective mm-wave transceivers. The uplink mm-wave radio operation 800 may include additional, less, or alternate functionality, including functionality discussed elsewhere herein.

### J. Additional Exemplary Connection Procedure Actions

In one aspect, a connection procedure that may have several additional and/or optional steps is discussed below. At step 1, the mobile device may start measuring the macrocell band proximity beacon channel from the mm-wave superspots listed in the mm-wave superspot list sent to the mobile device by the mmwSG.

At step 2, when the downlink (DL) signal quality measured over the macro-cellular band proximity beacon meets a criteria as advised by the mmwSG through the macrocell (for example, the RSSI (received signal strength indication), RSRP (reference signal receive power), RSRQ (reference signal received quality), and/or SINR > a threshold), the mobile device may send this measurement report to the mmwSG through the serving macrocell.

At step 3, if there is large volume data for the mobile device, the mmwSG may send a message to the mm-wave superspot with the mobile device's configuration parameters. The parameters may include speed, antenna properties, etc.

At step 4, if there is large volume data for the mobile, the mmwSG may also send a message through the macrocell link asking the mobile device to activate its mm-wave radio. The serving macrocell may provide the mobile device with the configuration of the mm-wave superspot. The configuration descriptors may include the mm-wave channels, bandwidths, transmission beacons, spatial beam specific beacons, etc.

At step 5, the mobile device may further be instructed to transmit a mobile device specific sequence over a specified set of uplink (UL) radio resources on the mm-wave band, such as with a specified transmit power periodically. This may allow the mm-wave superspot to detect the mobile device and align with the mm-wave radio in the mobile device.

At step 6, the mobile device may further perform mm-wave spatial beam specific measurements and feed that information back to the mm-wave superspot. This feedback may help the mm-wave superspot pick the right spatial beam on which to transmit the data to the mobile device.

At step 7, during the data offloading via the mm-wave superspot, the mobile device may have to listen to different spatial beams at different times as it traverses through the mm-wave superspot coverage. This beam switching procedure may be a part of the mm-wave superspot implementation.

At step 8, when the mobile device determines that the DL signal quality from the mm-wave superspot is deteriorating below a threshold, the mobile device may send an appropriate control message to the macro-cellular BS on the mmwCCH. This trigger may happen such that a seamless transition between the mm-wave superspot and the macro-cellular BS is ensured.

At step 9, the mmwSG may send a message to turn off the mm-wave transmitter at the mobile device and/or may advise the mm-wave superspot to cease transmission. If there is no further anticipated transmissions, the mmwSG may advise the mm-wave superspot to enter idle mode of operation to conserve power.

At step 10, the mobile device may resume the data transaction with its macrocellular serving BS by sending the PDCP data packet reception status to recover any lost data packets. The mobile device may suspend the UL transmission of mobile device specific sequences. The mobile device may still continue measuring the macrocellular band beacon measurements until the exit criteria are met. The connection procedure may have additional, less, or alternate functionality, including the functionality discussed elsewhere herein.

### K. Mobile Location and Mm-wave Superspot Selection Based Upon Prediction with Network Assisted Location Determination

In some embodiments, the following alternate wireless network centric procedure may be considered (as an alternative to using GPS coordinates) for selecting the mm-wave superspot for data transfer to the mobile device based upon its location and measurement reports. When the mobile device requests a service which requires a large amount of data pushed to/from the mobile device, for example, video content, location (localized) maps, etc., the macrocellular network may send a radio resource control (RRC) message to the mobile device to transmit specific sequences intermittently at, or with, a specified power and/or for a specified amount of time.

These sequences may be received by macrocell BSs in the vicinity. During the transmission of these sequences, the mobile device may still undergo handover to another serving cell. The sequence transmission may preferably not be interrupted during this serving cell change procedure.

When initiating the RRC message, the serving BS may also instruct the surrounding BSs to listen to the sequence by providing the configuration of the mobile device specific sequence. All of the BSs may report back the measurements to a server such as an OAM/SON (operations, administration and management/self organizing network) server or to a server at one anchor cell.

The server may further evaluate this received data and match it with the geographical data, and then determine an appropriate mm-wave superspot to push the data into the mobile device. The server may select the mm-wave superspot after collecting multiple samples of the measurement report and applying a prediction algorithm to determine the direction and/or speed of mobile device movement.

The BSs may be determined based upon the location and the specifics of the prediction algorithm. Further, the BS interaction with the central entity, such as an OAM/SON server, may be prioritized for this application, so that low latency may be ensured.

The sequence transmission may be performed on a different frequency or the same carrier frequency, such as 4G transmissions. The transmission may also be on a lower frequency, such as 700 MHz.

During the prediction process, the data to be pushed to the mobile device may be forwarded to surrounding mm-wave superspot stations in the vicinity by the media server (or other data provider). This may be done to avoid bottleneck at the backhaul network. As the prediction becomes more accurate, the data transmission may be continued only for some mm-wave superspot stations that are in proximity to the predicted mobile device location or trajectory. Other stations may dump the data once informed by the OAM/SON entity. The wireless network procedure may include additional, less, or alternate functionality, including the functionality discuss elsewhere herein.

### L. Exemplary Benefits

A macrocell network enabled mm-wave superspot for mobility is described herein. The system configuration described may enable high volume data, such as movies, to be downloaded or uploaded efficiently through a high capacity mm-wave superspot located strategically in high traffic areas, *i.e.,* on highways or alongside railway lines, under the guidance of an mm-wave Superspot Gateway (mmwSG). Based upon a user's predicted destination/location and the user's demand for high volume data, the data may be routed to the mm-wave superspot(s) and delivered to or received from the user.

The methods and systems described herein may enable efficient use of both macrocell BS and mm-wave superspots by introducing collaboration between the macrocell and the mm-wave system. This approach may leverage the macrocell control plane for continuity of connection while using the mm-wave superspot's user plane and optionally, inband control signaling, for download or upload of high volume data. No handover may be required since the rendezvous with the mm-wave superspot may be expected to be very brief (as short as a fraction of a second), and the macrocell connectivity may not be discontinued during the transfer to/from the mm-wave superspot.

Further, in case that the data transfer is not completed at the first superspot, the transfer may continue seamlessly at a subsequent superspot that the mobile device encounters. For example, in the case of a movie download, a user may begin watching a movie which is partially downloaded and in the meantime, the rest of the movie may be downloaded from the next superspot location.

A database of channel estimates may be maintained in the mmwSG for the mm-wave superspots. The data may then be matched with the mobile device's and the mm-wave superspot's current conditions, and may be communicated to the superspot in order to utilize some *a priori* channel knowledge to set radio transmission parameters.

While some of the embodiments detailed herein describe vehicular mobility, the embodiments apply equally to pedestrian mobility and any other form of mobility for a mobile device. The same solution may be used to off-load data traffic from heavily-loaded macrocells. Dual mode mobile devices with software defined radio capability may also get large radio software downloads and updates through this procedure. The exemplary benefits may include additional, fewer, or alternate advantages, including enhanced (a) connectivity, (b) use of bandwidth or resources, (c) user experience, and/or (d) data rates, and/or other benefits discussed elsewhere herein.

### X. ADDITIONAL EMBODIMENTS

### A. Exemplary Network Configurations

In one aspect, a mm-wave superspot gateway may control the overall communication between the mobile device and the super superspot. For instance, the macro cellular network may act as a conduit for collating and ensuring continuity of communication for a mobile device that is momentarily (*i.e.,* in the order of milli-seconds or seconds) transiting the mm-wave superspot.

One objective may be to minimize the communications set-up time and/or network service interaction time for the mobile device when it enters the superspot coverage zone so that the maximum time may be used for payload data transfers. This may be of import as the mobile device may only be in the superspot coverage area for a short time due, for example, either to the small size of the mm-wave beam coverage, and/or the speed of the mobile device travelling in a vehicle through an ITS (Intelligent Transportation Systems) zone. Preloading the data at the superspot, for example, may also remove the variability of the performance of the network data source server and/or variable network delays associated with the communications process time from the superspot to the mobile device.

### i. LTE eNodeB

The mm-wave superspot may be integrated with the macrocell network. In some instances, it may be a separate facility (*i.e.,* part of another network or independent). Sometimes the mm-wave radio may use a LTE waveform format, sometimes the IEEE 802.11p (ITS), IEEE 802.11ad (60 GHz), or other IEEE waveform format, and other times broadcast only formats, such as the digital video broadcasting (DVB) or advanced television systems committee (ATSC) formats. It should be noted that the methods and systems of the present embodiments may be applicable across all networking arrangements, and are not intended to be unique to LTE radios or networks.

In some embodiments, the mm-wave superspot may be considered as a part of the LTE network. The mm-wave radio waveform may support service channels to the LTE, and/or may be, or be viewed, as an eNodeB by the network (*i.e.,* such as a high capacity eNodeB for a small cell). The superspot may have all of the signalling and capabilities associated with a LTE eNodeB (and/or homeNodeB). The signalling and the routing of data through the superspot may take advantage of the capabilities embedded in 3GPP (3^{rd} Generation Partnership Project) standards and/or other standards.

The capabilities of the present embodiments may be utilized in (1) a mm-wave eNodeB to preload link set-up and the data files in advance of the mobile device's coming within range, and/or (2) at an eNodeB in the macro network. The concept of preloading data at an eNodeB may also be extended to a general eNodeB in the macro network, such as via LTE or other wireless communications.

The present embodiments may extend the benefit of efficient interaction with the mobile device to the mobile networks simplifying scheduling at the eNodeB, and may reduce battery power usage in the mobile device due to shorter radio transmission sessions. For example, if the data is preloaded at the eNodeB, transmissions to the mobile device may be scheduled without the need to await further data segments coming across the network from the source, and thus may proceed more quickly and without interruptions while awaiting interactions with the network source and/or server.

### ii. Hybrid Deployments

Additionally or alternatively, in some deployments there may be hybrid situations in which the mm-wave superspot eNodeB may be an adjunct to the macro mobile network and its channels may be aggregated with the macro network channels (e.g., using LTE channel aggregation processes). In some cases, the eNodeB superspot may be part of the mobile device's serving network. In other cases, the eNodeB superspot may be associated with another LTE network.

In these cases, the benefits of the present embodiments, including the preloading of data at the superspot and pre-arranged rapid radio link establishment when within range, may be used to ensure efficient use of the aggregated channel during the limited time that the mobile device is within range. This may result in improved performance and user experience, for example, than waiting until the mobile device comes within range of the superspot before initiating the channel aggregation process since the usual standard process for aggregation may take longer than the time that the mobile device is within range of the superspot.

### iii. Wi-Fi Aspects

Additionally or alternatively, in some deployments, the mm-wave superspot facility may be independent of the macro-cell network using a different radio link (*i.e.,* IEEE 802.11p used for the Intelligent Transportation Systems (ITS) context, or the IEEE 802.11ad used for 60 GHz superspots) and be IP network connected. In other deployments, the mm-wave superspot or ITS portal may be part of a Wi-Fi network that is independently owned by another network than the mobile device's home operator, or alternatively owned by the mobile device's home operator or another 3GPP operator.

These superspots may have much in common with Wi-Fi Hotspots. For example, the superspot may be a part of ITS facilities (*i.e.,* perhaps owned by a local highways department) or the Transit Railway (or their subcontractors). In these scenarios, as illustrated by the present embodiments, there may be a mm-wave superspot gateway between the 3GPP mobile network and the superspot, such as to mediate between 3GPP mobile device signalling and the superspot's signalling, network, and/or functionality.

The gateway may serve to manage the mobile device's entry and exit through the superspot and to translate the signalling protocols between the mobile network, superspot/Wi-Fi Hotspot, application data sources and sinks, and/or the mobile device. Alternatively, it may be advantageous for the mobile device to communicate directly with the superspot/Hotspot (*i.e.,* without using a mm-wave superspot gateway) to initiate the superspot/Hotspot linkage with the mobile device, and/or data to and/or from the sources or sinks in the network.

### iv. Ad-Hoc Arrangements

Additionally or alternatively, there may be some cases where the mobile device is not currently a subscriber of any mobile network, and may use the Wi-Fi network and mm-wave superspots on an ad-hoc basis. In this configuration in which the mobile device may not be connected to a mobile network, the mobile device may acquire and interwork with the superspot on its own.

In typical cases, this may happen using the existing procedures for a mobile device to discover and connect to an IEEE 802.11 Hotspot or superspot. In the case of a pedestrian or stationary mobile device, the standard IEEE 802.11ad or 802.11p connection procedures may be sufficient. However, for a more rapidly moving mobile device, that only has an opportunistic "moment" to connect and up/download with the superspot, the conventional interaction procedures may be too slow to be successful.

Conversely, the present embodiments may provide procedures for rapidly connecting a mobile device to a mm-wave superspot without expending unnecessary mobile device energy for rendezvousing with the superspot. The present embodiments may provide a procedure for routing the traffic in the generic model wherein the mm-wave superspot gateway works with the mobile device over the macrocell link, such as in order to optimally connect the mobile device to the superspot as demanded by traffic needs.

### B. Exemplary Channel Acquisition & Parameter Exchange

Discussed below are exemplary methods of channel acquisition and exchange of additional parameters with the mm-superspot to assist in beam-forming and discovery by the mobile device of the superspot signals and its associated network.

### i. Channel Acquisition

The process of acquiring the mobile device signals by the superspot may have some complexity as the mm-wave superspot (or any other type of wireless Access Point (AP)) may be connecting with, and simultaneously servicing, multiple mobile devices at one time, and it should be able to connect with multiple mobile devices and keep them all sorted out or identified from one another. The process of initiating the mobile device's initial radio contact with the superspot may be improved in speed and accuracy by including some prepared identification information as a part of the initial signalling.

This identification information may be prepared and exchanged between the mobile device and the superspot in advance of the mobile device coming into range of the superspot using the mobile device's macro cellular communications links. Extensions to the preambles of the superspot transmissions may be used to assist in the rapid identification by the individual mobile device when approaching the superspot.

For example, the IEEE 802.11 standard RF bursts may include a preamble sequence at the beginning of each transmission frame that acts to train the RF receiver. If the superspot is using the IEEE 802.11 radio system, it may be extended to incorporate an initial recognition/paging transmission from the superspot access point. In the IEEE 802.11 standards, the preamble may always be the same *(e.g.,* a string of 128 ones), and thus may be recognizable by all of the mobile devices within range.

The standard RF preamble/training sequence may be extended to include a recognition or identification code burst that may be unique for each arriving mobile device. Thus, the arriving mobile device may be able to immediately recognize its code when it comes within range, and the superspot may be able to immediately identify the mobile device from its reply. The identification burst preamble may be a short string of ones followed by a bit sequence with a strong auto-correlation property *(e.g.,* a generalized extended Barker code or codes such as complimentary codes that have the advantage of a larger number of possible identities due to longer code lengths). Other identification code bursts may be used.

Thus, the mobile device may scan the received signals, which may come from multiple superspot beams and be for multiple and other mobile devices. The mobile device may recognize the transmission that is intended for it through correlation with the known code. In another alternative, a common correlation code may be used based upon the mobile device's home network rather than the individual mobile device.

The preamble burst information (*i.e.,* the correlation sequence) may be exchanged between the superspot/Hotspot and the mobile device as part of the preparation for the mobile device's arrival in the superspot/Hotspot's coverage zone. That is, the preamble identification burst pattern may be passed to the mobile device from the superspot via the macrocell link before the mobile device reaches the superspot beam. The mobile device may thus be able to quickly recognize transmissions from the superspot beam when it comes into range, and may be rapidly recognized by the superspot for the initial signalling interchange when coming into range. The paging packet sent by the superspot may also contain within its message body further information to assist the mobile device and the superspot to initiate their communications.

The mobile device may be able to decode this information using an encryption key that has previously been agreed upon and communicated via the macrocellular communications channels before the mobile device entered the superspot coverage zone. Protection of the RF link transmissions by an individual pre-communicated key may ensure that the mobile device's identity, registration, and communications at the superspot will not be hijacked by an outsider or used to obtain network access.

If the superspot is using the LTE radio system and network as a pseudo or actual eNodeB, the mobile device may already be identified to the network and the mobile device may search the prearranged LTE downlink control channel for information about the appropriate resource blocks for its response. If the superspot transmissions are synchronised with the macro network, the mobile device and the superspot may be able to simply prearrange the frame timing for the superspot to initiate its paging and/or the RF channel.

The time of the contact between entities may be pre-calculated (by either the mobile device or the mm-wave superspot gateway) based upon the speed of the mobile device and its position relative to the superspot beam coverage area. For example, the mobile device's distance from the superspot divided by its velocity (in appropriate units) will yield the time increment for the superspot to start its paging of the mobile device as the mobile device enters the superspot beam coverage.

If the superspot provides a downlink only service, such as a DVB or ATSC multiplex channel, the basic RF channel acquisition by the mobile device may use the standard process when it comes into range, but the mobile device may be informed of a frame time, multiplex level, and/or decryption code to separate its designated (unique) transmissions. A group coding may be used if the data stream is part of a broadcast service (*i.e.,* TV channel or subscription for driving conditions, weather, or news information channels). In this instance, the mobile device may divide its velocity by the distance to the superspot beam coverage to determine the time at which the mobile device should activate its receiver for the superspot transmissions.

### ii. Two-way Communication

For the initial contact between the mobile device and the superspot, if a two-way communication link is to be utilized (*i.e.,* LTE or IEEE 802.11), it may be preferable to have the mobile device listen for superspot bursts as the mobile device is travelling into range of the superspot/Hotspot. For the mobile device to listen with its receiver to hear the superspot's initial bursts may conserve mobile device battery power. For instance, more power may undesirably be consumed by the mobile device if it was to be transmitting first as it is coming into the coverage area of the superspot.

The superspot AP and the mobile device may use the mobile device's speed and the separation distance to predict a time to start transmitting and listening. The superspot may transmit the initial recognition code burst repeatedly after the scheduled time (and/or for a limited time, such as up to a pre-defined maximum interval, to guard against the mobile device not coming into range or otherwise not being able to successfully respond) until the superspot receives a response from the intended mobile device.

In addition to the preamble recognition sequence, the mobile device and the superspot may be provided with a data encryption key. As a result, the mobile device may verify the superspot contact information and respond with a suitably encrypted acknowledgment message in response. When the superspot receives a response to its initial burst from the mobile device, the superspot may decode the burst information using the key to ensure that the correct mobile device is replying.

The mobile device/superspot interaction may continue using the common keys to upload/download data bursts while the mobile device is within superspot range. The superspot/mobile device data exchange bursts may also maintain the preamble identification sequence. Note that the superspot may be servicing multiple mobile devices with bursts in the same beam, and the keys and preamble identification may help to separate the radio traffic bursts by both the superspot and the mobile device.

The mobile device receiver may reject any received bursts without the desired identification code. As a result, the mobile device may save the receiver power that would be needed to fully decode all of the bursts sent out by the superspot (many of which may be destined for other mobile devices). This may also save receiver power while the mobile device is searching for signals as it comes within the beam range. It may further save mobile device power if the beam is servicing multiple mobile devices at the same time as the mobile device may not need to decode bursts that are not intended for it (as these burst may have a different preamble).

However, depending upon the radio interface and the radio bands used by the macro network and the superspot, there may be some additional timing restrictions. The listening intervals performed by the mobile device for the superspot may be chosen in time such they may not be blocked by other transmissions by the mobile device to other networks. For example, if the superspot is using a LTE format in a band close to a channel being used by the mobile device for macro network attachment, then the mobile device may be unable to hear the superspot's transmissions if those transmissions occur while the mobile device is transmitting to the macro cellular uplink.

This may not be a problem in most systems in which the mobile device macro network channel may be, for example, in the 2 GHz band while the superspot may be operating in the 60 GHz band. These bands may be sufficiently separated in frequency to avoid interference between the mobile device macro transmitters and the superspot receiver. If both transmission frequencies were in the 2 GHz band, interference avoidance may be more difficult.

### iii. RF Parameter Exchange

The parameters to be exchanged between the mobile device and the superspot via the mobile network channel prior to setting up a RF (radio frequency) link may include: (i) the time (or frame ID) for the commencement of the superspot transmissions; (ii) the ending time for the expected interaction between the mobile device and the superspot initial beam; (iii) the preamble autocorrelation sequence burst identification code; (iv) the mobile device unique temporary ID and transaction encryption key; (v) the mobile device's velocity; (vi) beam-forming parameters; (vii) RF channel frequency or channel number; (viii) RF burst format coding technique; (ix) RF power level; (x) RF error correction coding techniques; and/or other RF parameters.

Some of these RF parameters (e.g., power level, coding, RF channel) may typically be renegotiated by the mobile device and the superspot AP. For instance, the RF parameters may be renegotiated at the time of RF link initiation and/or during a burst sequence to suit the current channel conditions.

### iv. Superspot Set-up

As part of the superspot set-up process (such as using either the macro managed mm-wave control plane and the superspot gateway, or using the mobile device and over-the-top signalling to the superspot), the mobile device may also exchange with the superspot the mobile device's velocity and direction to enable the superspot (and/or the mobile device) to compute the needed Doppler shift of the RF signals. In a further alternative, the knowledge of the mobile device's velocity may be useful to calculate the likely time duration of the mobile device's encounter with the mm-wave beam.

The size extent of the superspot beam divided by the speed of the mobile device may indicate the time duration of the mobile device's passage through the beam. The superspot and/or the mobile device may use this anticipated duration to calculate the amount of data that may be exchanged during the encounter.

In some cases, it may be predicted that the encounter may be too brief for a useful data exchange to occur when other traffic is also considered. The velocity and journey path may also indicate that the mobile device may transit multiple beams of the superspot. Such as indication may enable the superspot and/or the mobile device to plan beam-handovers during the encounter.

The predicted duration of the encounter may also facilitate planning the radio transmission rates and coding. If the interaction time is longer, for example, the superspot (for downlink) and/or the mobile device (for uplink) may chose a slower transmission rate and/or more protective coding to fully utilize the time available and/or increase the probability of an error-free transmission.

In planning its transmission activities, the superspot may use knowledge of the duration of the mobile device's encounter to coordinate its plans for other mobile devices also being serviced. For example, the superspot may delay the start of the downlink transmission to the mobile device within the predicted encounter window to enable it to finish transmissions or receptions with other mobile devices. The scalable data packet lengths discussed elsewhere herein may also be utilized.

### v. Dynamic Beam-Forming & Tracking

The present embodiments may be viewed primarily in the context of fixed mm-wave beams from the mm-wave superspot. Additionally or alternatively, the superspot operation may also include modes using dynamic beam-forming and/or tracking of the mobile device with an individual beam that follows the motion of the mobile device. To enable such beam acquisition and tracking, the superspot may exchange parameters with the mobile device, before the encounter with the superspot, using (a) the mm-wave mobility control channel of the macro network, and/or (b) the over-the-top signalling directly from the mobile device to the superspot via a macro cellular data channel.

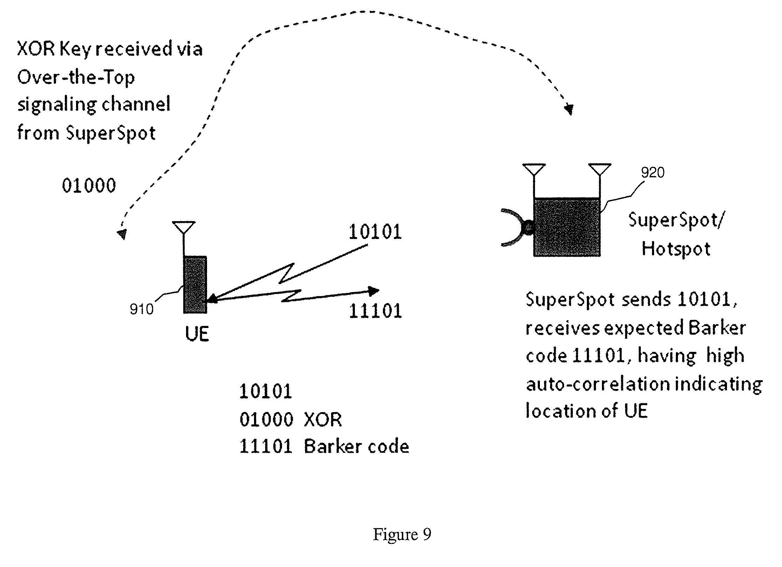

There may be a number of different techniques for capturing and focusing the steerable beam. In one alternative for acquisition, the superspot may emit a series of modulated RF bursts. When the mobile device detects the burst from the superspot, the mobile device may remodulate the burst with a code received as part of the set-up instructions from the superspot. The re-emitted signal may have a format that provides a compact spatial and temporal resolution *(see e.g.,* Figure 9).

Figure 9 illustrates an example of such a procedure. A UE 910 receives an XOR key (in this case, 01000) from a superspot 920 via an over-the-top signalling channel. The superspot 920 also sends the UE 910 a code (in this case, 10101). The UE 910 performs an XOR operation on the XOR key and the code to produce a Barker code (in this case, 11101) and sends the Barker code to the superspot 920. The superspot 920 then confirms that it has received the expected Barker code.

The technique may be similar to that used as part of the "Identification Friend or Foe" (IFF) processing for RADAR systems. The signal received after remodulation by the mobile device's code may have an auto-correlation property that more precisely identifies location in space and time. The complementary codes mentioned previously herein may also be a good choice for this functionality.

In the initial contact with the mobile device, the superspot may emit a series of interrogation RF transmission pulses at different angles *(e.g.,* at increments of half or approximately half the superspot beamwidth), such as in the direction that the mobile device is approaching. The approach direction may be calculated from the relative location of the mobile device, the mobile device travel path, and/or the superspot location information exchanged as part of the mobile device/superspot communications prior to the mobile device's arrival within the coverage of the superspot zone.

For each received pulse, the mobile device may respond with its code, and thus the superspot receiver may be able to determine the beam angle at which it receives the best signal. As the mobile device is likely travelling along a path that has already been used by many previous mobile devices coming into range, the superspot may assist the capture and tracking of its beam using previously stored beam steering paths. For these mobile devices, the responses may thus enable the superspot to accurately focus and direct the beam at the desired mobile device. Continuing data bursts between the mobile device and the superspot may include similar focusing signals in the preambles and responses that may enable the superspot to track the beam and follow the motion of the mobile device.

In a further alternative of beam-forming, the mm-wave superspot may further adapt its beam to also steer beam nulls at the other various mobile devices in its area to improve radio performance with the intended mobile device. Note that while the macrocell LTE communications link may be typically in FDD (frequency division duplexing) mode, the mm-wave superspot radio may be in TDD (time division duplexing) mode.

The TDD may utilize regular intervals of transmission and reception *(e.g.,* as used in DECT (digital enhanced cordless telecommunications) cordless telephony), or asynchronous transmission and reception bursts (such as typical of IEEE 802.11 Wi-Fi systems), which may enable the use of the beam acquisition and tracking signal formats. In the event that the macrocell LTE communications link is operating in TDD mode, in a preferable alternative, the mobile device may need to arrange its transmissions with the superspot to not overlap the macro reception intervals and to reduce the possibility of interference between the radios.

The need to arrange the timing to avoid interference may depend upon the frequency separation of the radio transmissions of the macrocells and the superspot. If, for example, the superspot is operating at 60 GHz while the macro cellular signals are at 2 GHz, there may be sufficient frequency separation for RF filtering to sufficiently isolate the signals without additional time separation. However if, for example, the superspot or Hotspot is operating at 2.4 GHz while the macrocellular signals are at 2.3 GHz, there may not be sufficient frequency separation for filtering to sufficiently isolate the signals and additional time separation control may be required.

### vi. Secure Communications

Generally, the mobile device may be using a temporary ID in the macro network, to preserve its anonymity, and this ID may be reused as a part of the superspot communications. However, a preferable alternative may be for the mobile device to adopt a new temporary ID for interactions with the superspot to better conceal its activity from third party listeners. This new temporary ID for the superspot interaction may be communicated with the mobile device using the mm-wave mobility control channel of the macro network.

Use of the macro network encryption keys to protect data privacy may also be maintained. However, using those keys may require the data to flow through the macrocell network for decryption as that may be the only place those keys are known. Alternatively, the encryption processes and keys for data protection may be set up for the interactions uniquely with the superspot via the macro network signalling link. This may enable the data to flow directly to and/or from the superspot and to its source or destination in the wider network, such as the Internet, without the need for encryption/decryption by the macrocellular mobile network facilities.

### vii. Preloading Data

To preload the data at the mm-wave superspot (or Wi-Fi HotSpot or ITS node), the mobile device's application and the mmwSG may coordinate the data transfer. Retrieving the data may involve active interaction with the mobile device's application that selects the data needed and provides the necessary keys, billing and/or accounting information. In some scenarios, it may be necessary for the user to interact with web-pages in the network to find and initiate the data transfer (such as with either uploading or downloading).

Currently, there may be no concept of, or provision for, intermediate storage in the network as a part of data transfers. The data may flow from the source to the destination directly, such as with only intermediate brief storage of packets to buffer the flow, and the routing of the flow may change depending upon traffic conditions and/or network availability. The end user application may have no knowledge of, and may have no way of communicating with, any of the intermediate nodes along the communication transmission path. Typically in current data transfer arrangements, if the network flow becomes blocked or is not ready, the data may be held at the source until the channel becomes clear.

To preload data in advance to the superspot, the mobile device might work through a proxy set up in the mm-wave superspot gateway and/or in the mm-wave superspot AP to download the data in advance. The proxy may pass the mobile device's instructions received at the macrocellular link to the network data source to enable the user to interact with the service. On the downlink, the proxy may pass the user's command responses and/or queries to the mobile device via the macrocellular link and filter off the data for storage at the mm-wave superspot AP for later download to the mobile device, such as when the mobile device is within range of the superspot.

In this sequence, the mobile device's responses to the service may be "interspersed" with subcommands to the proxy to manage the interaction. Thus, the user "clicking" upon a download command button, may be accompanied by additional command packets destined for the proxy to indicate that the following data file from the source may be stored at the superspot for later delivery to the mobile device. This storage may include, for example, a reference number or ID that the superspot and the mobile device may use to identify the data file later during the superspot interaction or other communications. If, for example, the mobile device is unable to receive or send the data file through the direct superspot RF interaction, the identified file may be transferred using another channel at a later time.

Generally, the user's command and data traffic with the network service may be encrypted. As a result, it may be difficult for the Network Gateway or the superspot to intervene. The operation of the proxy may thus include functionality to establish the needed encrypted link with the network service, and/or a separate encrypted ink with the mobile device using the macrocellular link. The proxy may thus be able to act on commands between the mobile device and the network service.

### C. Over-The-Top Signalling

The mobile device/superspot interaction may utilize over-the-top (OTT) signalling (e.g., via IP) and not rely on LTE internal network signalling channels and gateways. In this case, the mobile device may communicate directly with the superspot and its data services, and there may be no need for standardized LTE signalling or a network gateway node.

Some of the present embodiments may provide a continuity of transmission between superspot RF links and macrocell RF links, such as in the case that the download is not completed while the mobile device is within range of the superspot. Thus, the mobile device may communicate with a superspot gateway or similar component which may process the superspot channel conditions, mobile device speeds, etc. for those mobile devices that are deemed to require superspot (Gbps) connectivity. The gateway may then direct the data flows though the superspot links or the macrocellular links depending upon the mobile device's location and channel conditions. The superspot gateway may, for example, continue a data download via a macrocellular channel if it does not complete the download while the mobile device is within range of the superspot.

Alternatively, the superspot gateway may elect to suspend a data transfer such that the data transfer may be continued when the mobile device transits another superspot. The superspot gateway may thus act as a "switching point" to direct the data flow to the most suitable superspot or macro-cellular network. The details of the communication link with the mobile device and the macro network (e.g., via a mmwCCH that is part of a macrocell standard or an overlay) is a matter of implementation. This alternative may have the advantage that the gateway operation and superspot processing may be largely invisible to the mobile device.

### i. Exemplary OTT Signalling

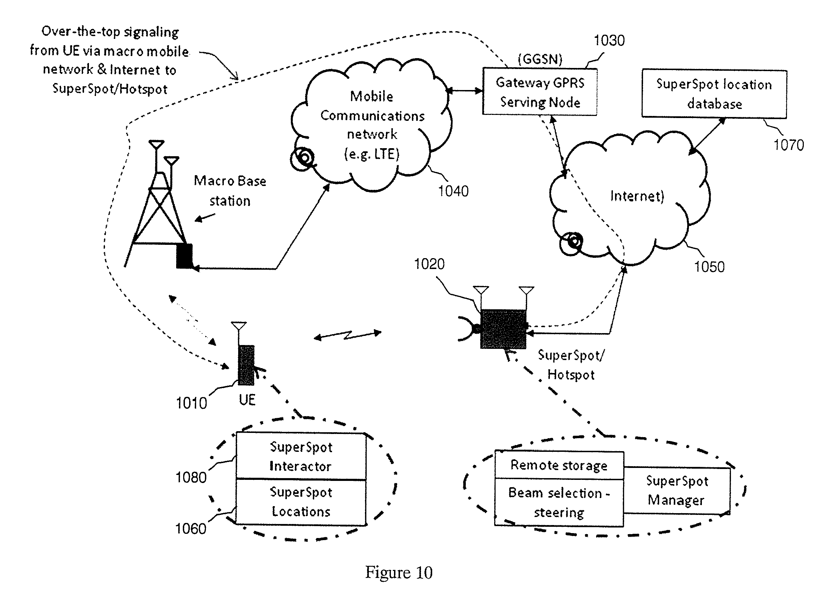

An additional or alternative implementation may not rely on LTE macro network signalling and the services of a superspot gateway in the network. This alternative is illustrated in Figure 10. In this approach, the IP connection from a mobile device 1010 to a superspot 1020 may pass through, for example, a standard Gateway GPRS Support Node (GGSN) 1030 that may connect a mobile network 1040 with the wider IP network (internet) 1050. This approach may be implemented entirely within the mobile device 1010 without the need for additional network components.

As shown in Figure 10, an alternative implementation may utilize an "over-the-top" (e.g., IP connection) between the mobile device 1010 and the nearby mm-wave superspot 1020. The messaging may pass over an IP data channel in the LTE network 1040 and the IP network to the superspot 1020. There may be no special "superspot gateway" provided to link the mobile network 1040 with the superspots 1020. The process may be entirely mobile device-controlled without the need for a gateway element in the network.

In operation, the mobile device 1010 may monitor its location. The mobile device location may be determined from GPS services or a similar service, and/or may be based upon sensing macro-cell locations or sensing superspot or Wi-Fi Hotspot signals. The ITS system on the highway may also provide location identification as part of its functionality.

The mobile device 1010 also may determine its proximity to nearby superspot(s) 1020 based upon the mobile device's travel plans and/or the mobile device's needs for downloading or uploading data. The mobile device 1010 may consult a geographic location database with its location to determine the proximity of superspots 1020 (or Wi-Fi Hotspots). The mobile device 1010 may contain an internal storage map 1060 of superspot/Hotspot locations based upon its past experience, travel plans, and/or a listing previously loaded by subscription. Communication with a geographic location data base 1070 may occur via over-the-top IP signalling over the macrocellular facilities.

The mobile device 1010 may set up a communications channel to the identified superspot 1020 using an IP link from a mobile device superspot Interactor 1080 over the macrocellular facilities (over-the-top). The mobile device 1010 may obtain the needed IP addresses and communications protocols/identifications from the database 1070 as part of determining the appropriate local superspot/Hotspot 1020 that is being approached.

The mobile device 1010 may negotiate with the mm-wave superspot 1020 over the direct IP link to set up parameters for the mm-wave superspot beam and the delivery of data (or access process for a Wi-Fi Hotspot). The parameters may include the timing, identification codes, transponder codes, and encryption keys, as well as other RF parameters, such as channel frequency modulation and RF power level.

The mobile device 1010 may use the negotiated parameters to initiate mm-wave communications with the superspot 1020 when within range. The initiation may include responses to steer the superspot beam towards the mobile device path. This may also apply to any Hotspot the mobile device 1010 encounters.

The mobile device 1010 may communicate signalling and data uplink or downlink with the superspot 1020 during the encounter with the superspot's beams. The mobile device 1010 may communicate other types of information.

The mobile device 1010 may conclude the communication with the mm-wave superspot 1020 over the direct IP link after the encounter with the superspot's beams. In the event that the encounter uploaded data to the superspot 1020, the mobile device 1010 may continue to communicate with the superspot 1020 to deliver the data from the superspot 1020 to its intended destination in the network.

This may be a preferred method for uplink traffic bursts (*i.e.,* from a mobile video sensor or camera or for a data upload) as it may be all choreographed by the mobile device 1010. The data may be transferred directly to the superspot's intermediate storage while the mobile device 1010 is within range. Subsequently, likely after the mobile device 1010 has passed through the beam, the mobile device 1010 may orchestrate the data's further transfer from the superspot storage to its network destination using signalling to the superspot 1020 via the macro network over the top communications.

### ii. Exemplary Mobile Device

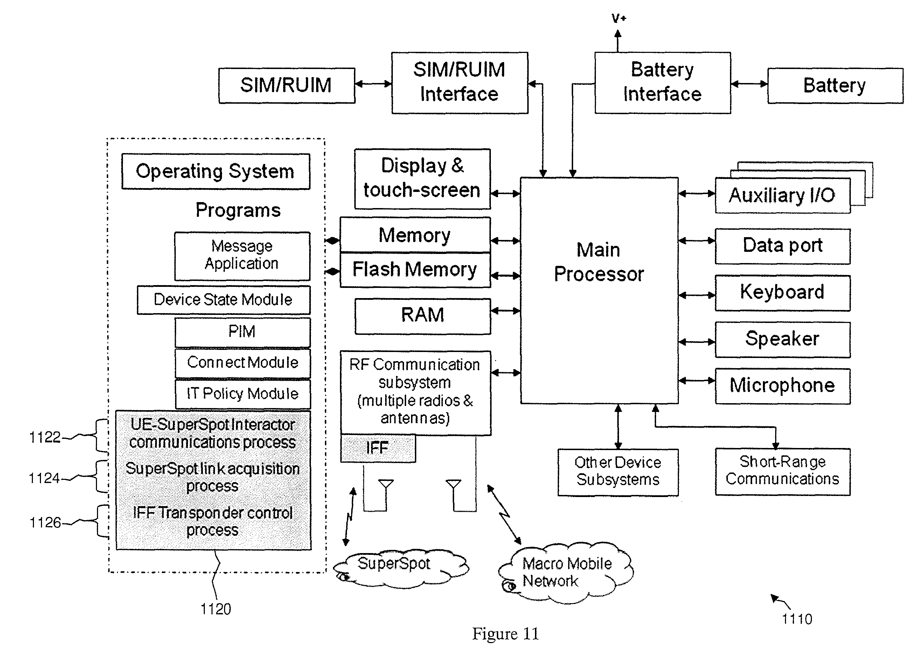

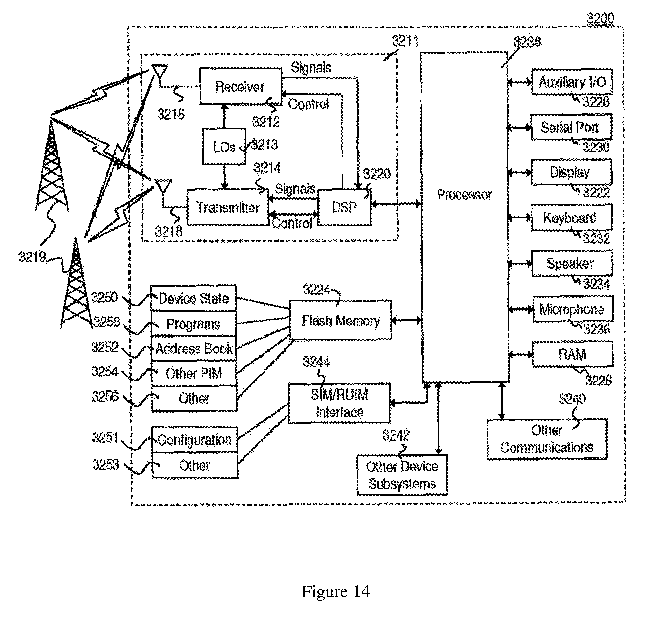

Figure 11 illustrates an exemplary mobile device 1110. The mobile device 1110 may include components described in detail with regard to the UE 3200 of Figure 14, and such components will not be described in detail with regard to Figure 11. The mobile device 1110 may also be configured to include superspot-related communications process and control components 1120. The mobile device 1110 may be configured with a communications process and data flow management component 1122, a superspot link acquisition component 1124, and/or a IFF transponder control component 1126. Additionally, an IFF transponder apparatus may be added to the superspot RF sub-system. These elements may be in addition to the many other elements of a mobile device that provide the mobile device with its overall functionality.

### iii. Exemplary Superspot Access Point

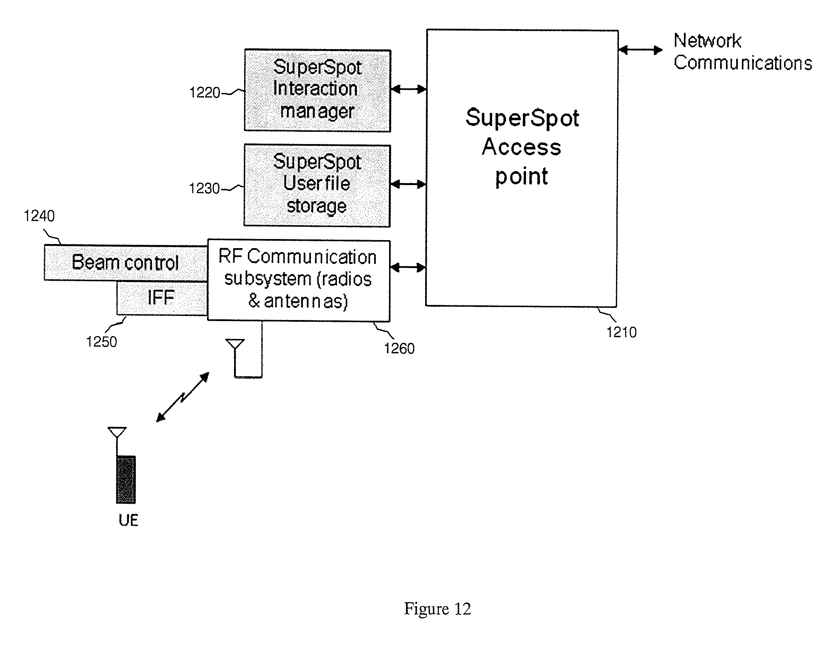

Figure 12 illustrates an exemplary superspot access point 1210. The superspot access point 1210 may include components for superspot interaction management 1220, user storage 1230, beam control 1240, and IFF detection 1250 as highlighted elements of the superspot. The beam control component 1240 and the IFF detection component 1250 may be components in an RF communication subsystem 1260 of the superspot access point 1210. These elements that are part of this disclosure may be discussed elsewhere herein and may be in addition to the many other elements of a superspot access point 1210 that are included in the superspot access point 1210 for its overall functionality.

### D. Pre-loading Data at Superspots/Hotspots

Pre-loading data procedures at superspots and Hotspots may operate as if the storage is an external storage unit of the mobile device with the operating system communication occurring over the mobile network communications link.

To facilitate the temporary storage of the data in the superspot/Hotspot until the mobile device comes within range, the mobile device and the superspot/Hotspot may function as if the superspot/Hotspot storage is equivalent to a remote storage unit (*i.e.,* equivalent to an external disk drive on a PC operating system) that may be controlled through links via the macro mobile network connection to the superspot/Hotspot. The mobile device may thus choreograph the loading or reading of data to/from the "remote storage" in the superspot/Hotspot.

For downlink data flows, the process of using intermediate storage may avoid the need for some special agreement with the content provider, who may not want data stored outside of its control. For uplink data flows, the mobile device based application may also arrange itself to pre-load the data for uplink, such as when the mobile device is within range of the superspot/Hotspot beam. The mobile device may then supervise the linkages and transfer of the data from the superspot/Hotspot to the end destination so that the data may be transferred from the superspot to its destination.

The mobile device may organize to burst the data to the superspot intermediate storage when within range of the superspot, and then to transfer the data to the end network destinations(s) using the macrocellular OTT control channel from the superspot. In this context (for both uplink and downlink flows), the superspot may be thought of as an external (temporary) disk storage that may be a part of the mobile device, and the mobile device may be thought of as moving files between internal and external drives.

The mobile device's software operating system may be exchange commands with the superspot proxy storage using the OTT communications link. This type of hybrid proxy storage may help to allay the content supplier's concerns about duplicate copies of its material.

### E. Incorporating the Access of Wi-Fi Hotspots

The present embodiments involving the use of a macro network communication channel to locate and to provide parameters to initiate communication with a mm-wave superspot may also be used to assist the mobile device in accessing "ordinary" WiFi Hotspots. The macro mobile network communications channels may be used in a similar way to locate suitable local Wi-Fi Hotspots and to communicate with the Hotspot access manager.

Parameters may be exchanged with the mobile device to permit the mobile device to access the Hotspot. These parameters may include, for example, an encryption key *(e.g.,* a Wi-Fi Protected Access (WPA) key) and a login procedure identification and password. This application of the present embodiments may alleviate the problem many mobile devices have with automatically logging into IEEE 802.11 Hotspots. The superspot communications channel may be used to exchange credentials with IEEE 802.11 Hotspots to enable universal logging into superspot APs. The exchange may be an Over-the-Top interaction between the mobile device and the Hotspot to allow for recognition of each other and/or set up credentials for the Wi-Fi link.

This mediation may also be a service provided by a network server, such as the BlackBerry network, that acts as an intermediary between the mobile device and the Hotspot/superspot to enable Wi-Fi or mm-wave radio/network access. In an alternative, the BlackBerry network server or a similar server may identify the Hotspot based upon location geography of the mobile device and a map of the Hotspot locations. Alternatively, the mobile device may relay information to the Blackberry server or a similar server that the mobile device has overheard from a nearby Hotspot AP *(i.e.,* the AP ID and login sequence). The BlackBerry server or a similar server may then, responsive to recognising the Hotspot signature, negotiate access for the mobile device and send the needed login credentials/procedures to the mobile device.

### XI. EXEMPLARY NETWORK ELEMENT & MOBILE DEVICE

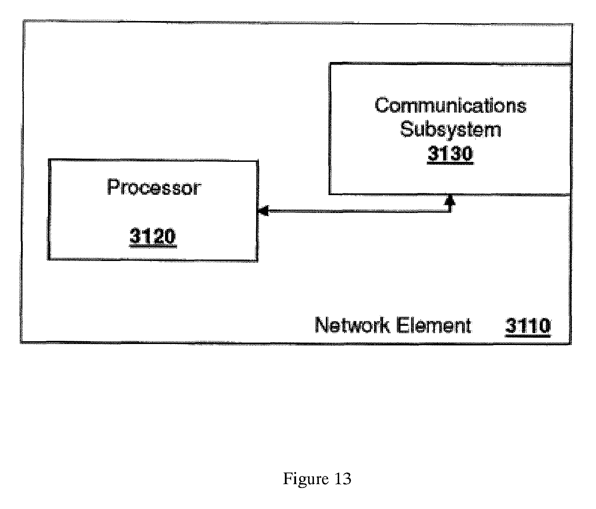

Certain embodiments above may be implemented by a network element. An exemplary network element is shown with regard to Figure 13. In

Figure 13, network element 3110 may include a processor 3120 and a communications subsystem 3130, where the processor 3120 and communications subsystem 3130 may cooperate to perform the methods and functionality described above.

Further, certain embodiments may be implemented by a mobile device or user equipment (UE). One exemplary mobile device is described below with regard to Figure 14. UE 3200 may typically be a two-way wireless communication device having voice and data communication capabilities. UE 3200 generally may have the capability to communicate with other computer systems on the Internet. Depending upon the exact functionality provided, the mobile device or user equipment (UE) as used herein may be referred to as a smart phone, lap top, notebook, web book, smart watch, personal digital assistant, data messaging device, a two-way pager, a wireless e-mail device, a cellular telephone with data messaging capabilities, a wireless Internet appliance, a wireless communications device, or a data communication device, as examples.

Where UE 3200 is enabled for two-way communication, it may incorporate a communication subsystem 3211, including a receiver 3212 and a transmitter 3214, as well as associated components, such as one or more antenna elements 3216 and 3218, local oscillators (LOs) 3213, and a processing module such as a digital signal processor (DSP) 3220. As will be apparent to those skilled in the field of communications, the particular design of the communication subsystem 3211 may be dependent upon the communication network in which the mobile device is intended to operate.

Network access requirements may also vary depending upon the type of network 3219. In some networks network access is associated with a subscriber or user of UE 3200. A UE may require a removable user identity module (RUIM) or a subscriber identity module (SIM) card in order to operate on a network. The SIM/RUIM interface 3244 is normally similar to a card-slot into which a SIM/RUIM card can be inserted and ejected. The SIM/RUIM card may have memory and hold many key configurations 3251, and other information 3253 such as identification, and subscriber related information.

When required network registration or activation procedures have been completed, UE 3200 may send and receive communication signals over the network 3219.

Signals received by antenna 3216 through communication network 3219 may be input to receiver 3212, which may perform such common receiver functions as signal amplification, frequency down conversion, filtering, channel selection and the like. Analog to digital (A/D) conversion of a received signal may allow more complex communication functions, such as demodulation and decoding to be performed in the DSP 3220. In a similar manner, signals to be transmitted may be processed, including modulation and encoding for example, by DSP 3220 and input to transmitter 3214 for digital to analog (D/A) conversion, frequency up conversion, filtering, amplification and transmission over the communication network 3219 via antenna 3218.

DSP 3220 may not only process communication signals, but may also provide for receiver and transmitter control. For example, the gains applied to communication signals in receiver 3212 and transmitter 3214 may be adaptively controlled through automatic gain control algorithms implemented in DSP 3220.

UE 3200 may generally include a processor 3238, which may control the overall operation of the device. Communication functions, including data and voice communications, may be performed through communication subsystem 3211. Processor 3238 may also interact with further device subsystems, such as the display 3222, flash memory 3224, random access memory (RAM) 3226, auxiliary input/output (I/O) subsystems 3228, serial port 3230, one or more keyboards or keypads 3232, speaker 3234, microphone 3236, and/or other communication subsystem 3240, such as a short-range communications subsystem and any other device subsystems generally designated as 3242. Serial port 3230 can include a USB port or other port known to those in the art.

### XII. EXEMPLARY SUBSYSTEMS

Some of the subsystems shown in Figure 14 perform communication-related functions, whereas other subsystems may provide "resident" or on-device functions. Notably, some subsystems, such as keyboard 3232 and display 3222, for example, may be used for both communication-related functions, such as entering a text message for transmission over a communication network, and device-resident functions, such as a calculator or task list.

Operating system software used by the processor 3238 may be stored in a persistent store such as flash memory 3224, which may instead be a read-only memory (ROM) or similar storage element (not shown). Those skilled in the art will appreciate that the operating system, specific device applications, or parts thereof, may be temporarily loaded into a volatile memory such as RAM 3226. Received communication signals may also be stored in RAM 3226.

As shown, flash memory 3224 may be segregated into different areas for both computer programs 3258 and program data storage 3250, 3252, 3254 and 3256. These different storage types indicate that each program can allocate a portion of flash memory 3224 for their own data storage requirements. Processor 3238, in addition to its operating system functions, may enable execution of software applications on the UE. A predetermined set of applications that control basic operations, including at least data and voice communication applications for example, may normally be installed on UE 3200 during manufacturing. Other applications may be installed subsequently or dynamically.

Applications and software may be stored on any computer readable storage medium. The computer readable storage medium may be a tangible or in transitory/non-transitory medium such as optical *(e.g.,* CD, DVD, etc.), magnetic (e.g., tape) or other memory known in the art.

One software application may be a personal information manager (PIM) application having the ability to organize and manage data items relating to the user of the UE such as, but not limited to, e-mail, calendar events, voice mails, appointments, and task items. Naturally, one or more memory stores may be available on the UE to facilitate storage of PIM data items. Such PIM applications may have the ability to send and receive data items, via the wireless network 3219. Further applications may also be loaded onto the UE 3200 through the network 3219, an auxiliary I/O subsystem 3228, serial port 3230, short-range communications subsystem 3240 or any other suitable subsystem 3242, and installed by a user in the RAM 3226 or a non-volatile store (not shown) for execution by the processor 3238.

Such flexibility in application installation increases the functionality of the device and may provide enhanced on-device functions, communication-related functions, or both. For example, secure communication applications may enable electronic commerce functions and other such financial transactions to be performed using the UE 3200.

In a data communication mode, a received signal, such as a text message or web page download, may be processed by the communication subsystem 3211 and input to the processor 3238, which may further process the received signal for output to the display 3222, or alternatively to an auxiliary I/O device 3228.

A user of UE 3200 may also compose data items, such as email messages for example, using the keyboard 3232, which may be a complete alphanumeric keyboard or telephone-type keypad, among others, in conjunction with the display 3222 and possibly an auxiliary I/O device 3228. Such composed items may then be transmitted over a communication network through the communication subsystem 3211.

For voice communications, overall operation of UE 3200 may be similar, except that received signals may typically be output to a speaker 3234 and signals for transmission may be generated by a microphone 3236. Alternative voice or audio I/O subsystems, such as a voice message recording subsystem, may also be implemented on UE 3200. Although voice or audio signal output may be preferably accomplished primarily through the speaker 3234, display 3222 may also be used to provide an indication of the identity of a calling party, the duration of a voice call, or other voice call related information for example.

Serial port 3230 in Figure 14 may normally be implemented in a personal digital assistant (PDA)-type UE for which synchronization with a user's desktop computer (not shown) may be desirable, but is an optional device component. Such a port 3230 may enable a user to set preferences through an external device or software application and may extend the capabilities of UE 3200 by providing for information or software downloads to UE 3200 other than through a wireless communication network. The alternate download path may, for example, be used to load an encryption key onto the device through a direct, and thus reliable and trusted, connection to thereby enable secure device communication. As will be appreciated by those skilled in the art, serial port 3230 may further be used to connect the UE to a computer to act as a modem.

Other communications subsystems 3240, such as a short-range communications subsystem, is a further optional component which may provide for communication between UE 3200 and different systems or devices, which need not necessarily be similar devices. For example, the subsystem 3240 may include an infrared device and associated circuits and components or a Bluetooth™ communication module to provide for communication with similarly enabled systems and devices. Subsystem 3240 may further include non-cellular communications such as Wi-Fi or WiMAX.

The UE and other components described above may include a processing component that is capable of executing instructions related to the actions described above. As used herein, the term instructions may include reserved words which may cause one or more processors to take certain computational, memory-related or control actions or to send computational, memory-related or control signals. As used herein, the term program may include a collection of computer instructions.

### XIII. EXEMPLARY SYSTEM

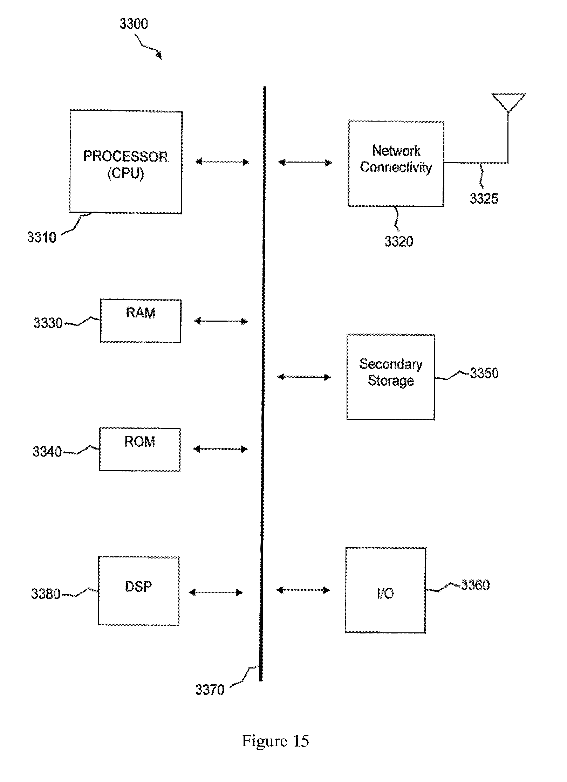

Figure 15 illustrates an example of a system 3300 that includes a processing component 3310 suitable for implementing one or more embodiments disclosed herein. The processing component 3310 may be substantially similar to the processor 3120 of Figure 13 and/or the processor 3238 of Figure 14.

In addition to the processor 3310 (which may be referred to as a central processor unit or CPU), the system 3300 may include network connectivity devices 3320, random access memory (RAM) 3330, read only memory (ROM) 3340, secondary storage 3350, and input/output (I/O) devices 3360. These components may communicate with one another via a bus 3370. In some cases, some of these components may not be present or may be combined in various combinations with one another or with other components not shown. These components may be located in a single physical entity or in more than one physical entity. Any actions described herein as being taken by the processor 3310 may be taken by the processor 3310 alone or by the processor 3310 in conjunction with one or more components shown or not shown in the drawing, such as a digital signal processor (DSP) 3380. Although the DSP 3380 is shown as a separate component, the DSP 3380 may be incorporated into the processor 3310.

The processor 3310 may execute instructions, codes, computer programs, or scripts that it may access from the network connectivity devices 3320, RAM 3330, ROM 3340, or secondary storage 3350 (which may include various disk-based systems, such as hard disk, floppy disk, or optical disk). While only one CPU 3310 is shown, multiple processors may be present. Thus, while instructions may be discussed as being executed by a processor, the instructions may be executed simultaneously, serially, or otherwise by one or multiple processors. The processor 3310 may be implemented as one or more CPU chips, and may be a hardware device capable of executing computer instructions.

The network connectivity devices 3320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, universal mobile telecommunications system (UMTS) radio transceiver devices, long term evolution (LTE) radio transceiver devices, worldwide interoperability for microwave access (WiMAX) devices, and/or other well-known devices for connecting to networks. These network connectivity devices 3320 may enable the processor 3310 to communicate with the Internet and/or one or more telecommunications networks or other networks from which the processor 3310 may receive information or to which the processor 3310 may output information. The network connectivity devices 3320 may also include one or more transceiver components 3325 capable of transmitting and/or receiving data wirelessly.

The RAM 3330 may be used to store volatile data and perhaps to store instructions that are executed by the processor 3310. The ROM 3340 may be a non-volatile memory device that may have a smaller memory capacity than the memory capacity of the secondary storage 3350. ROM 3340 may be used to store instructions and perhaps data that are read during execution of the instructions. Access to both RAM 3330 and ROM 3340 may be typically faster than to secondary storage 3350. The secondary storage 3350 may be typically comprised of one or more disk drives or tape drives and may be used for non-volatile storage of data or as an over-flow data storage device if RAM 3330 is not large enough to hold all working data. Secondary storage 3350 may be used to store programs that are loaded into RAM 3330 when such programs are selected for execution.

The I/O devices 3360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 3325 might be considered to be a component of the I/O devices 3360 instead of or in addition to being a component of the network connectivity devices 3320.

### XIV. EXEMPLARY METHODS

### A. Exemplary Mobile Device-Implemented Method

In one aspect, a computer-implemented method of data offloading to a mobile device via a cellular wireless system may be provided. The method may include, at the mobile device (or moving mobile device): (a) wirelessly communicating with a macrocell (or base station) via a first frequency at the mobile device; (b) turning on a transceiver (or receiver) operating on a second frequency that is different from the first frequency at the mobile device when movement of the mobile device is expected to bring the mobile device within range of a superspot and there is data marked for high speed download to the mobile device; and/or (c) receiving data packets from the superspot via the transceiver (receiver) on the mobile device operating at the second frequency when (1) the mobile device is within range of the superspot and simultaneously in wireless communication with the macrocell via a second transceiver operating at the first frequency, and/or (2) when signal quality, channel conditions, and/or macrocell traffic to the mobile device are confirmed to support dual mode operation on the mobile device. As a result, a moving mobile device may receive periodic high speed downloads of data from superspots while traveling along a route and without requiring handovers from the macrocell. The method may include additional, less, or alternate actions, including those discussed elsewhere herein.

### B. Exemplary Remotely-Implemented Methods

In another aspect, a computer-implemented method of data transfer to a mobile device may be provided. The method may include (1) wirelessly or otherwise receiving a request for a data download from and/or to a mobile device at a first entity, the first entity being configured to transmit to, and/or receive from, the mobile device via a first frequency (*e.g*., the first entity may be in wireless communication with the mobile device via the first frequency, such as a Long Term Evolution (LTE) or IEEE related frequency). The request for a data download to a mobile device may be initiated by a network, base station, superspot, or other remote communication device, including those discussed elsewhere herein. Additionally or alternatively, a request for a data download to a mobile device may be received from the mobile device itself and/or otherwise initiated by the mobile device. The method may also include: (2) directing, at or from the first entity, the staging of the data download at a second entity via wireless communication between the first entity and the second entity, the second entity may be configured to transmit to, and/or receive from, the mobile device via a second frequency that is different from the first frequency (*e.g*., the second entity may be capable of wireless communication with the mobile device via the second frequency, such as a mm-wave related frequency or other frequency capable of providing for large volume downloads); (3) determining (such as at the first or second entity), when the mobile device will be within wireless communication range of the second entity, or otherwise capable of receiving the data download via the second frequency; (4) remotely instructing or controlling (such as at and/or from the first or second entity) the mobile device to activate a transceiver configured for the second frequency, such as via wireless communication between the mobile device and the first or second entity; and/or (5) remotely or wirelessly directing (such as from the first or second entity), or otherwise causing, the data download to be transmitted to the mobile device from the second entity via the second frequency while simultaneously maintaining a connection or wireless communication between the first entity and the mobile device via the first frequency.

In one embodiment, the first entity may be a macrocell or base station, and the second entity may be a mm-wave superspot. In another embodiment, the first entity may be an eNodeB and the second entity may be a superspot or Hotspot.

More generally, the first entity may be a macrocell, BS, eNodeB, homeNodeB (LTE NodeB located in a home or small business), relay node, access node, AP, other type of node, or other entity capable of wireless communication. The second entity may be a superspot, Hotspot, mm-wave superspot, Wi-Fi Hotspot, eNodeB, mm-wave eNodeB, or other entity capable of wireless communication.

The first frequency may be a LTE, IEEE, or other standard-related frequency. The second frequency may be a mm-wave frequency, or a LTE, IEEE, or other standard-related frequency that is substantially different from the first frequency to avoid interference between the first and second frequencies. The method may include additional, less, or alternate steps, including those discussed elsewhere herein.

In another aspect, a computer-implemented method of data transfer to a mobile user equipment (UE) associated with a macrocell (or base station) in a cellular wireless system may be provided. The method may include (a) enabling, at the macrocell, an alternate-radio access technology (RAT) (such as LTE versus Wi-Fi or other alternate RATs) mobility control channel between the macrocell and the mobile UE, the alternate-RAT mobility control channel may be dedicated to managing the link between the mobile UE and a remotely located, high capacity Access Point (AP) equipped with a RAT on an alternate carrier; and/or (b) utilizing the alternate-RAT mobility control channel for: (i) predicting proximity of the mobile UE to the high capacity AP; (ii) preparing the mobile UE for connectivity to one of the high capacity AP's antenna beams based upon predicted channel quality; and/or (iii) opportunistically and/or selectively connecting the mobile UE to the remotely located, high capacity AP while maintaining the connection/wireless communication between the mobile UE and the macrocell. As a result, the mobile UE may simultaneously download data from both the high capacity AP and the macrocell ("dual mode operation") without requiring a handover of the mobile UE from the macrocell to the high capacity AP. The mobile UE may be opportunistically and/or selectively connected to the high capacity AP only when signal quality or channel conditions are confirmed to support dual mode operation and/or there is sufficient data to download to the mobile UE from the high capacity AP. The method may include additional, less, or alternate steps, including those discussed elsewhere herein.

### XV. EXEMPLARY MM-WAVE SUPERSPOT

An exemplary mm-wave superspot may be provided by the present embodiments. The mm-wave superspot may include a memory; and a processor configured to: (a) wirelessly receive a data download, such as from a macrocell or BS (or other entity or node, including those discussed elsewhere herein); (b) receive an instruction (such as from the macrocell, BS, or other entity) to activate a mm-wave transceiver on a mobile device based upon proximity of the mobile device to the mm-wave superspot; (c) wirelessly send an instruction (via a mm-wave, LTE-related, IEEE-related, or other frequency, including the frequencies discussed elsewhere herein) to the mobile device to activate the mm-wave transceiver on the mobile device, such as to activate the mm-wave transceiver once the mobile device becomes in the vicinity of, or within range of, the mm-wave superspot; and/or (d) transmit all, or a portion of, the data download to the mobile device via a mm-wave transmission from the mm-wave superspot when the mobile device is within mm-wave wireless communication range of the mm-wave superspot.

The mm-wave superspot may further include a macrocellular band beacon configured to transmit a beacon using a macrocellular frequency, wherein mobile device proximity is calculated based upon the beacon. The superspot processor may be configured to transmit a mm-wave beacon to the mobile device, wherein channel conditions are calculated based on the mm-wave beacon. The superspot processor may further be configured to scale a data packet length based upon mobility of the mobile device, and/or fragment a data packet based upon mobility of the mobile device. The mm-wave superspot may include additional, less, or alternate functionality, including the functionality discussed elsewhere herein.

Another exemplary mm-wave superspot may be provided by the present embodiments. The mm-wave superspot may include: (a) means for receiving a data download, such as from a macrocell or BS and/or via LTE-related, IEEE-related or other network elements; (b) means for receiving an instruction (such as from the macrocell or BS) to activate a mm-wave transceiver on a mobile device based upon proximity of the mobile device to a mm-wave superspot; (c) means for wirelessly sending an instruction (via a mm-wave, LTE-related, IEEE-related, or other frequency) to the mobile device to activate the mm-wave transceiver on the mobile device, such as to activate the mm-wave transceiver once the mobile device becomes in the vicinity of, or within range of, the mm-wave superspot; and/or (d) means for wirelessly transmitting all, or a portion of, the data download to the mobile device via a mm-wave transmission from the mm-wave superspot when the mobile device is within mm-wave wireless communication range of the mm-wave superspot.

In one embodiment, the "means for wirelessly receiving a data download," "means for wirelessly receiving an instruction," "means for wirelessly sending an instruction," and/or "means for wirelessly transmitting..." discussed above may include a processor programmed to perform the respective functionality and/or computer instructions stored on a non-transitory memory unit that relate to instructing the processor to perform the respective functionality at the superspot. The mm-wave superspot may include additional, less, or alternate functionality, including the functionality discussed elsewhere herein.

### XVI. EXEMPLARY NETWORK DEVICE

An exemplary network device for downloading data to a mobile device may be provided. The network device may include a processor configured to: (a) receive a request for a mobile device data download from the network device and/or a network associated with the network device, the network device may be associated with a macrocell or base station, and/or may be configured to transmit and receive via a first frequency via wireless communication with the mobile device and may be in wireless communication with the mobile device via the first frequency; (b) predict a travel route being taken by the mobile device and/or predict when the mobile device will be within wireless communication range of a superspot; (c) stage the mobile device data download at the superspot via communication with the superspot, the superspot being configured to transmit and receive via a second frequency that is different from the first frequency; (d) instruct the mobile device to activate a transceiver configured for the second frequency via wireless communication; and/or (e) cause, via wireless communication with the superspot and/or mobile device, the mobile device data download to be wirelessly transmitted to the mobile device from the superspot via the second frequency while simultaneously maintaining the wireless communication between the mobile device and the network device via the first frequency.

The network device processor may be configured to determine the imminent proximity of the mobile device to the superspot based upon reports of the mobile device's location and trajectory received via the first frequency. The staging of the mobile device data download may be based upon the imminent proximity.

The network device processor may be configured to determine that the mobile device has entered a coverage area of the superspot based upon reports of a beacon signal transmitted from the superspot via the first frequency. The causing of the mobile device data download to be transmitted may be based upon the mobile device entering the coverage area of the superspot.

The network device processor may be configured to maintain a database. The database may comprise radio parameters for one or more mm-wave pencil beams of the superspot. The network device processor may be configured to update the database using reports generated by the mobile device based upon mm-wave transmissions of the mobile device. The network device processor may be configured to update the database using reports generated by an RF sensing radio receiving mm-wave transmissions of the superspot.

The network device may be associated with the macrocell or BS, or a wireless communication gateway, an eNodeB, or other wireless communication device. The first frequency may be a LTE-related, IEEE-related, or other wireless communication frequency. The second frequency may be mm-wave, IEEE-related frequency, or other frequency that is different from the first frequency. The superspot may be a mm-wave superspot, a Wi-Fi Hotspot, eNodeB superspot or Hotspot, a wireless communication gateway, or other superspot, Hotspot, or eNodeB. The superspot may wirelessly communication via mm-waves, LTE-related frequencies, IEEE-related frequencies, or other frequencies. The network device may include additional, less, or alternate functionality, including the functionality discussed elsewhere herein.

Another exemplary network device may be provided. The network device may include: (a) means for wirelessly receiving a request for a mobile device data download from the network device, such as a network device associated with a macrocell or base station that is configured to transmit and receive via a first frequency during wireless communication with the mobile device; (b) means for predicting a travel route being taken by the mobile device and/or predicting when the mobile device will be within wireless communication range of a superspot; (c) means for staging the mobile device data download at the superspot via communication with the superspot, the superspot being configured to transmit and receive via a second frequency that is different from the first frequency; (d) means for instructing the mobile device to activate a transceiver configured for the second frequency via wireless communication; and/or (e) means for causing, via wireless communication with the superspot and/or mobile device, the mobile device data download to be wirelessly transmitted to the mobile device from the superspot via the second frequency.

In one embodiment, the "means for wirelessly receiving...," "means for predicting...," "means for staging...," "means for instructing...," and/or "means for causing..." discussed above may include a processor programmed to perform the respective functionality and/or computer instructions stored on a non-transitory memory unit that relate to instructing the processor to perform the respective functionality at the network device. The network device may include additional, less, or alternate functionality, including the functionality discussed elsewhere herein.

### XVII. ADDITIONAL ASPECTS

It should be understood that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated, including the exemplary designs and implementations illustrated and described herein, but may be modified within the scope of the appended claims along with their full scope of equivalents. Some embodiments are described herein in the context of an LTE wireless network or system, but may be adapted for other wireless networks or systems.

As used herein, the term "user equipment" (alternatively "UE") might in some cases refer to mobile devices such as mobile telephones, personal digital assistants, handheld or laptop computers, and similar devices that have telecommunications capabilities. Such a UE might include a device and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might include the device itself without such a module. In other cases, the term "UE" might refer to devices that have similar capabilities but that are not transportable, such as desktop computers, set-top boxes, or network appliances. The term "UE" can also refer to any component that may terminate a communication session for a user. Also, the terms "user equipment," "UE," "user agent," "UA," "user device," and "mobile device" might be used synonymously herein.

As telecommunications technology has evolved, more advanced network access equipment has been introduced that may provide services that were not possible previously. This network access equipment might include systems and devices that are improvements of the equivalent equipment in a traditional wireless telecommunications system. Such advanced or next generation equipment may be included in evolving wireless communications standards, such as Long-Term Evolution (LTE) and LTE-Advanced (LTE-A). For example, an LTE or LTE-A system might be an Evolved Universal Terrestrial Radio Access Network (E-UTRAN) and include an E-UTRAN node B (or eNB), a wireless access point, or a similar component rather than a traditional base station. As used herein, the term "access node" refers to any component of the wireless network, such as a traditional base station, a wireless access point, an LTE or LTE-A node B or eNB, that may create a geographical area of reception and transmission coverage allowing a UE or a relay node to access other components in a telecommunications system. In this document, the terms "access node" and "network element" may be used interchangeably, but it is understood that an access node may comprise a plurality of hardware and software.

The geographical area of reception and transmission coverage provided by an access node may be referred to herein as a cell. Some cells may have significantly larger coverage area than others and may be referred to herein as macro-cells. Some cells may have significantly smaller coverage area than the macro-cells and may be referred to herein as small cells. Small cells may also include micro-cells, pico-cells, and femto-cells. In some embodiments, small cells may operate within the area covered by a macro-cell.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made without departing from the spirit and scope disclosed herein.

## Claims

1. A computer-implemented method of downloading data to a mobile device comprising:
receiving, at a first entity, a request for a data download to a mobile device, the first entity being configured to transmit and receive via a first frequency;
wirelessly controlling, at the first entity, a staging of the data download at a second entity configured to transmit and receive via a second frequency, the second frequency being different than the first frequency;
wirelessly instructing the mobile device to activate a transceiver configured for the second frequency; and
wirelessly directing, from the first or second entity, the data download to be transmitted to the mobile device from the second entity via the second frequency while the mobile device maintains a wireless connection with the first entity via the first frequency.

2. The method of claim 1, further comprising:
providing a second entity proximity list to the mobile device via the first frequency.

3. The method of claim 1 further comprising:
pre-staging data at a second entity based on a predicted proximity of the mobile device to the second entity.

4. The method of claim 1 further comprising:
receiving, from the mobile device, signal quality measurement updates related to the second entity via the first frequency.

5. The method of claim 4, wherein directing the data download to be transmitted to the mobile device is triggered when the signal quality measurement updates are above a predetermined threshold.

6. The method of claim 5, wherein the signal quality measurement updates are based upon a signal received from a beacon transmitting from the second entity via the first frequency.

7. A network device that facilitates data downloads to mobile devices, the network device comprising:
a processor configured to:
receive a request for a mobile device data download from a network associated with the network device, the network device being configured to transmit and receive via a first frequency and is in wireless communication with the mobile device via the first frequency;
stage the mobile device data download at a second entity configured to transmit and receive via a second frequency, the second frequency being different from the first frequency;
wirelessly instruct the mobile device to activate a transceiver located on the mobile device that is configured for the second frequency; and
cause the mobile device data download to be transmitted to the mobile device via the second frequency while simultaneously maintaining the wireless communication between the mobile device and the network device via the first frequency.

8. The network device of claim 7, wherein the processor is further configured to determine an imminent proximity of the mobile device to the second entity based upon reports of the mobile device's location and trajectory received via the first frequency, and the staging of the mobile device data download is based upon the imminent proximity.

9. The network device of claim 7, wherein the processor is further configured to determine that the mobile device has entered a coverage area of the second entity based upon reports of a beacon signal transmitted from the second entity via the first frequency, and the causing of the mobile device data download to be transmitted is based upon the mobile device entering the coverage area of the second entity.

10. The network device of claim 7, wherein the processor is further configured to maintain a database, the database comprising radio parameters for one or more wireless beams of the second entity.

11. The network device of claim 10, wherein the processor is further configured to update the database using reports generated by the mobile device based upon transmissions of the mobile device on the second frequency.

12. The network device of claim 10, wherein the processor is further configured to update the database using reports generated by an RF sensing radio receiving transmissions of the second entity on the second frequency.

13. A computer-implemented method of data downloading to a mobile device, the method comprising:
(a) wirelessly communicating with a first entity via a first frequency by the mobile device;
(b) turning on a transceiver operating on a second frequency that is different from the first frequency at the mobile device when movement of the mobile device is expected to bring the mobile device within range of a second entity and there is data marked for download to the mobile device; and
(c) receiving data packets from the second entity via the transceiver on the mobile device operating at the second frequency when the mobile device is within coverage of the second entity and simultaneously in wireless communication with the first entity via a second transceiver operating at the first frequency.

14. The method of claim 13, wherein the received data packets are transmitted from the second entity when signal quality, channel conditions, and/or macrocell traffic are confirmed to support dual mode operation on the mobile device.

15. The method of claim 13, wherein the first frequency is used for cellular or Long Term Evolution (LTE) wireless communications and the second frequency is a mm-wave frequency.
